# EUROPEAN PATENT SPECIFICATION

(11) **EP 4 618 293 B1**
(45) Date of publication and mention of the grant of the patent: **02.12.2026**
(21) Application number: 25162665.1
(22) Date of filing: 10.03.2025
(51) Int. Cl.: H01M 50/454, H01M 10/0525, H01M 50/434, H01M 50/44, H01M 50/446, H01M 50/451, H01M 10/0587, H01M 50/443, H01M 50/46, H01M 50/414, H01M 50/417, H01M 50/457

(54) **SECONDARY BATTERY AND ELECTRONIC DEVICE**
SEKUNDÄRBATTERIE UND ELEKTRONISCHE VORRICHTUNG
BATTERIE SECONDAIRE ET DISPOSITIF ÉLECTRONIQUE

(30) Priority: 11.03.2024 CN 202410276147
(43) Date of publication of application: 17.09.2025
(73) Proprietor: Ningde Amperex Technology Limited, Ningde City, Fujian Province 352100 (CN)
(72) Inventor: YAO, Meina, Ningde City, Fujian Province, China, 352100 (CN)
(74) Representative: Icosa

(56) References cited:
- EP-A2- 3 910 703
- CN-A- 116 345 070
- US-A1- 2015 056 485

## Description

### TECHNICAL FIELD

This application relates to the field of electrochemical technology, and in particular, to a secondary battery and an electronic device.

### BACKGROUND

By virtue of the advantages such as a high energy density, a long cycle life, a low self-discharge rate, and environment-friendliness, lithium-ion batteries have been widely used in the fields such as aviation, aerospace, marine navigation, and electric vehicles. The performance of a separator in a lithium-ion battery decides an interface structure, an internal resistance, and the like of the lithium-ion battery, and directly affects the capacity, cycle performance, and safety performance of the lithium-ion battery. Excellent performance of the separator plays an important role in improving the overall performance of the lithium-ion battery.

The separator includes a base film and a ceramic coating. Currently, typical base films include a polyolefinic porous film (a microporous film) and a nonwoven fabric film. Typical ceramic coatings include aluminum oxide and boehmite (γ-AlOOH). Different performance effects can be achieved by matching a different base film with a ceramic coating, but improper matching may cause a decline in the performance of the secondary battery.

US 2015/056485 refers to wound electrode assemblies including positive and negative electrode plates and first and second separators.

### SUMMARY

An objective of this application is to provide a secondary battery and an electronic device to reduce the expansion rate of the secondary battery during cycling and improve the electrolyte storage performance, cycle performance, and high-temperature performance of the secondary battery.

It is hereby noted that in the description hereof, this application is construed by using a lithium-ion battery as an example of the secondary battery, but the secondary battery of this application is not limited to the lithium-ion battery. Specific technical solutions are as follows:

A first aspect of this application provides a secondary battery. The secondary battery includes an electrode assembly. The electrode assembly is a jelly-roll structure. The electrode assembly includes a positive electrode plate, a negative electrode plate, a first separator, and a second separator. The first separator includes a first base film and a first ceramic coating. The first ceramic coating is located on at least one surface of the first base film on a side. The first base film is a nonwoven fabric film. The first ceramic coating includes first ceramic particles. The first ceramic particles include at least one of aluminum oxide, zirconium dioxide, titanium dioxide, or silicon dioxide. The second separator includes a second base film and a second ceramic coating. The second ceramic coating is located on at least one surface of the second base film on a side. The second base film is a microporous film. The second ceramic coating includes second ceramic particles. The second ceramic particles include boehmite.

The ceramic particles in the ceramic coating in an existing separator are typically classed into two types: oxide and boehmite, both exerting a great impact on the performance of secondary batteries. The oxide-containing ceramic coating is highly wettable and highly capable of absorbing and retaining an electrolyte solution, thereby improving the cycle performance of the secondary battery. However, the oxide is of high hardness, causes great wear on a machine, and gives rise high cost of equipment. In addition, the oxide possesses a large specific gravity and is not flame retardant, thereby being adverse to the energy density and safety of the secondary battery. Compared with oxides, boehmite is of low hardness, high heat resistance, low density, and good adhesiveness, and can improve the heat resistance and puncture resistance of the separator and improve the safety performance and energy density of the secondary battery. However, boehmite is not much wettable by an electrolyte solution, and is adverse to electrolyte solution retention and the cycle performance of the secondary battery.

A typical base film for a separator in an existing secondary battery is a microporous film. The polymeric microporous film is typically prepared from a material such as polyolefin by a wet process or a dry process by means of uniaxial stretching or biaxial stretching, or by a thermally induced phase separation method. The microporous film is inexpensive and is of relatively high mechanical strength and chemical stability, and is relatively resistant to organic solvents. In addition, the thickness of the microporous film is typically small. When the polymeric microporous film is applied to a secondary battery, assuming that the size of the secondary battery is constant, the volumetric energy density of the secondary battery is relatively high. However, the glass transition temperature of the microporous film is relatively low. During charge and discharge of the secondary battery, when the internal temperature of the secondary battery reaches approximately 60 °C, due to the intercalation and deintercalation of lithium ions, the positive electrode plate and the negative electrode plate expand and shrink to generate internal stress. The internal stress is transmitted to the microporous film to squeeze the microporous film, thereby reducing the porosity gradually. The reduced porosity of the microporous film makes it difficult to intercalate and deintercalate lithium ions and shortens the cycle life of the secondary battery. In addition, the reduced porosity of the microporous film makes it difficult to dissipate the heat inside the secondary battery, and results in an excessive temperature rise of the secondary battery, thereby impairing the safety performance of the secondary battery. The nonwoven film is of relatively high capability of storing an electrolyte solution, and the glass transition temperature of the nonwoven film is relatively high, so that the thermal stability of the nonwoven film is relatively high. With the rise of the internal temperature of the secondary battery during charge and discharge, the nonwoven film maintains a relatively high porosity in addition to relatively high mechanical strength, thereby contributing to smooth flow of the electrolyte solution and improving the transmission rate of lithium ions. However, the thickness of the nonwoven fabric film is usually large, and is prone to impair the energy density of the secondary battery.

This application uses the first base film as a nonwoven fabric, with a relatively high glass transition temperature and good thermal stability. With the rise of the internal temperature of the secondary battery during charge and discharge, the first base film maintains a relatively high porosity while possessing relatively high mechanical strength. This enables smooth flow of an electrolyte solution and improves the transmission rate of lithium ions. The stable void structure of the first base film can also improve the capabilities of absorbing and retaining the electrolyte solution. However, the thickness of the first base film is relatively large. The first base film used in combination with an oxide ceramic coating makes up for the disadvantage that the heat resistance of the oxide ceramic coating is relatively low, and contributes to relatively high stability of the first separator at high temperature. In addition, the high electrolyte retainability of the first base film and the high electrolyte retainability of the oxide ceramic coating are added up to further improve the cycle performance of the secondary battery. The second base film is a microporous film with a relatively low glass transition temperature. A relatively thin second base film can be prepared by a wet process or a dry process by means of uniaxial stretching or biaxial stretching, so as to compensate for the energy density loss caused by the relatively thick first base film. The second base film coordinates with the second ceramic coating of a high heat resistance and a high puncture resistance, and the second ceramic coating can more effectively prevent the second base film from shrinking or closing pores at high temperature, thereby endowing the second separator with high safety.

Therefore, the above type of first base film is used in combination with the first ceramic particles to prepare the first separator, and the above type of second base film is used in combination with the second ceramic particles to prepare the second separator. The advantages of different materials of the separators can be exerted effectively when the first separator and the second separator are used in combination. The first separator and the second separator are of relatively high mechanical strength, and can effectively slow down the shrinkage of the first separator and the second separator during cycling of the secondary battery, reduce the thickness of the secondary battery, and in turn, increase the energy density of the secondary battery and improve the high-temperature thermal abuse performance of the secondary battery. In addition, the first separator and the second separator exhibit superior electrolyte storage performance, thereby improving the cycle performance of the secondary battery. Therefore, in the secondary battery of this application, the first separator and the second separator of different types are used in combination, so that the secondary battery is superior in electrolyte storage performance, high-temperature thermal abuse performance, and cycle performance.

In an embodiment of this application, the negative electrode plate is located between the first separator and the second separator. The negative electrode plate includes a negative current collector as well as a first negative electrode material layer and a second negative electrode material layer located on two sides of the negative current collector respectively. Along a winding direction of the electrode assembly, a length of the first negative electrode material layer is greater than a length of the second negative electrode material layer. The first separator is located on the same side as the first negative electrode material layer of the negative electrode plate. The second separator is located on the same side as the second negative electrode material layer of the negative electrode plate. Through the above arrangement, the porosity of the nonwoven fabric film is relatively high, and the average particle diameter of the first ceramic particles, that is, the oxide, is relatively large, so that the first separator is of higher wettability and higher ability to absorb and retain an electrolyte solution, thereby making it convenient for the first separator to store more electrolyte solution. When the first separator is located on the same side as the first negative electrode material layer of the negative electrode plate, it is convenient to adsorb more electrolyte solution on the A side of the negative electrode plate of the secondary battery (the A side is a side, on which the negative electrode material layer is relatively long, of the negative electrode plate), thereby improving the electrolyte storage performance of the negative electrode plate, and reducing the risk of lithium plating at the interface between the electrolyte solution and the negative electrode plate caused by electrolyte flow discontinuity at the later stage of cycling of the secondary battery. In addition, the above structure disposed in the secondary battery improves the high-temperature thermal abuse performance of the secondary battery and improvs the cycle performance of the secondary battery while achieving desirable electrolyte storage performance.

In an embodiment of this application, a material of the first base film includes polyethylene terephthalate, and a material of the second base film includes at least one of polypropylene or polyethylene. When the first base film and the second base film are made of the materials specified above, a dual-separator structure including a first separator and a second separator is disposed in the secondary battery, thereby reducing the thickness of the secondary battery, and in turn, increasing the energy density of the secondary battery. In addition, the secondary battery is superior in electrolyte storage performance, cycle performance, and high-temperature thermal abuse performance.

In an embodiment of this application, the first separator further includes a first bonding layer, and/or the second separator further includes a second bonding layer. The first bonding layer includes a first binder. The second bonding layer includes a second binder. The first binder and the second binder each are at least one independently selected from polyvinylidene fluoride, polyacrylonitrile, polyethylene oxide, or polyimide. By disposing the first bonding layer and the second bonding layer and selecting the above types of first binder and second binder, this application increases the adhesion between the first separator and the positive electrode plate, between the first separator and the negative electrode plate, between the second separator and the positive electrode plate, and between the second separator and the negative electrode plate, and also reduces the thickness of the secondary battery, increases the energy density of the secondary battery, and improves the cycle performance of the secondary battery. In this way, the secondary battery is superior in electrolyte storage performance, cycle performance, and high-temperature thermal abuse performance.

In an embodiment of this application, the second separator is located between the positive electrode plate and the negative electrode plate. The first ceramic coating is located on both sides of the first base film. The first ceramic particles include aluminum oxide. The second ceramic coating is located on just one side of the second base film, the side facing away from the negative electrode plate. The second ceramic particles include boehmite. With the second ceramic coating disposed on one side of the second base film, the side facing away from the negative electrode plate, the probability of separator piercing is reduced. Because the positive active material particles on the positive electrode plate are relatively hard, some positive active material particles that are relatively large-sized or pointy protrude from the positive electrode plate occasionally. In a process of producing or using the secondary battery, such positive active material particles are prone to pierce the separator between the positive electrode plate and the negative electrode plate and cause contact and short-circuiting between the positive electrode plate and the negative electrode plate. The second ceramic coating on the second separator is disposed on just one side of the second base film, the side facing away from the negative electrode plate. In other words, the second ceramic coating faces the positive electrode plate. The boehmite can improve the puncture resistance of the separator, thereby reducing the probability of the positive active material particles piercing the separator, and protecting the second base film more securely. In addition, a single-layer second ceramic coating can reduce cost and increase the energy density of the secondary battery while further improving the safety performance of the secondary battery.

In an embodiment of this application, an average particle diameter of the first ceramic particles is 0.2 µm to 1.2 µm, and an average particle diameter of the second ceramic particles is 0.1 µm to 1.0 µm. The average particle diameter of the first ceramic particles and the average particle diameter of the second ceramic particles are controlled to fall within the above ranges, thereby improving the electrolyte storage performance of the first separator and the second separator, and in turn, improving the cycle performance of the secondary battery. In this way, the secondary battery is superior in electrolyte storage performance, cycle performance, and high-temperature thermal abuse performance.

In an embodiment of this application, the coating weight of the first ceramic coating is 9 mg/cm² to 12 mg/cm², and the coating weight of the second ceramic coating is 9 mg/cm² to 12 mg/cm². Controlling the coating weight CW₁ of the first ceramic coating and the coating weight CW₂ of the second ceramic coating to fall within the above ranges can improve the thermal stability and strength of the first separator and the second separator, improve the mechanical properties of the first separator and the second separator, improve the ability of the first ceramic coating to bind the first separator and the ability of the second ceramic coating to bind the second separator, reduce the thickness of the secondary battery, and in turn, increase the energy density of the secondary battery, and moreover, improve the high-temperature thermal abuse performance of the secondary battery, and improve the electrolyte storage performance of the first separator and the second separator. In this way, the secondary battery is superior in electrolyte storage performance, cycle performance, and high-temperature thermal abuse performance.

In an embodiment of this application, the first ceramic coating further includes a first binder. The first binder includes at least one of a water-soluble acrylic copolymer, a water-based acrylate ester copolymer emulsion, polyvinyl alcohol, or polyvinyl pyrrolidone. Based on a mass of the first ceramic coating, a mass percent of the first binder is 5% to 20%. The second ceramic coating further includes a second binder. The second binder includes at least one of a water-soluble acrylic copolymer, a water-based acrylate ester copolymer emulsion, polyvinyl alcohol, or polyvinyl pyrrolidone. Based on a mass of the second ceramic coating, a mass percent of the second binder is 2% to 15%. When the above types of first binder and second binder are selected and the mass percent of the first binder and the second binder is controlled within the above range, the mechanical strength of the first ceramic coating and the second ceramic coating is increased, the electrolyte storage performance of the first separator and the second separator is improved, the thickness of the secondary battery is reduced, and in turn, the energy density of the secondary battery is increased, so that the secondary battery is superior in electrolyte storage performance, cycle performance, and high-temperature thermal abuse performance.

In an embodiment of this application, a thickness of the first base film is 10 µm to 15 µm, and a thickness of the second base film is 3 µm to 9 µm. Controlling the thickness of the first base film and the thickness of the second base film to fall within the above ranges can reduce the risk that the lithium dendrites generated during the cycling of the secondary battery pierce the second base film and cause a short circuit in the secondary battery, endow the first base film and the second base film with relatively high mechanical strength, reduce the thickness of the secondary battery, and in turn, increase the energy density of the secondary battery, and moreover, make the lithium-ion transmission distance moderate during the cycling of the secondary battery, and improve the electrolyte storage performance of the first separator and the second separator. In this way, the secondary battery is superior in electrolyte storage performance, cycle performance, and high-temperature thermal abuse performance.

A second aspect of this application provides an electronic device. The electronic device includes the secondary battery disclosed in any one of the preceding embodiments. The secondary battery of this application possesses a relatively high energy density and is superior in electrolyte storage performance, high-temperature thermal abuse performance, and cycle performance. Therefore, the electronic device of this application possesses a relatively long service life.

Some of the beneficial effects of this application are as follows:

This application provides a secondary battery and an electronic device. The secondary battery includes an electrode assembly. The electrode assembly is a jelly-roll structure. The electrode assembly includes a positive electrode plate, a negative electrode plate, a first separator, and a second separator. The first separator includes a first base film and a first ceramic coating. The first ceramic coating is located on at least one surface of the first base film on a side. The first base film is a nonwoven fabric film. The first ceramic coating includes first ceramic particles. The first ceramic particles include at least one of aluminum oxide, zirconium dioxide, titanium dioxide, or silicon dioxide. The second separator includes a second base film and a second ceramic coating. The second ceramic coating is located on at least one surface of the second base film on a side. The second base film is a microporous film. The second ceramic coating includes second ceramic particles. The second ceramic particles include boehmite. The above type of first base film is used in combination with the first ceramic particles to prepare the first separator, and the above type of second base film is used in combination with the second ceramic particles to prepare the second separator. The advantages of different materials of the separators can be exerted effectively when the first separator and the second separator are used in combination. The first separator and the second separator are of relatively high mechanical strength, and can effectively slow down the shrinkage of the first separator and the second separator during cycling of the secondary battery, reduce the thickness of the secondary battery, and in turn, increase the energy density of the secondary battery and improve the high-temperature thermal abuse performance of the secondary battery. In addition, the first separator and the second separator exhibit superior electrolyte storage performance, thereby improving the cycle performance of the secondary battery. In this way, the secondary battery is superior in electrolyte storage performance, high-temperature thermal abuse performance, and cycle performance.

Definitely, a single product or method in which the technical solution of this application is implemented does not necessarily achieve all of the above advantages concurrently.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.
FIG. 1 is a schematic structural diagram of an electrode assembly according to an embodiment of this application;
FIG. 2 is a schematic structural diagram of an electrode assembly according to another embodiment of this application;
FIG. 3 is a schematic structural diagram of an electrode assembly according to still another embodiment of this application; and
FIG. 4 is a schematic structural diagram of an electrode assembly according to yet another embodiment of this application.

List of reference numerals: electrode assembly 100; first separator 10; first base film 11; first ceramic coating 12; first bonding layer 13; second separator 20; second base film 21; second ceramic coating 22; second bonding layer 23; negative electrode plate 30; negative current collector 31; negative electrode material layer 32; first negative electrode material layer 33; second negative electrode material layer 34; positive electrode plate 40; positive current collector 41; positive electrode material layer 42.

### DETAILED DESCRIPTION

The following describes the technical solutions in some embodiments of this application clearly in detail with reference to the drawings appended hereto.

It is hereby noted that in specific embodiments of this application, this application is construed by using a lithium-ion battery as an example of the secondary battery, but the secondary battery of this application is not limited to the lithium-ion battery.

A first aspect of this application provides a secondary battery. The secondary battery includes an electrode assembly. The electrode assembly is a jelly-roll structure. The electrode assembly includes a positive electrode plate, a negative electrode plate, a first separator, and a second separator. The first separator includes a first base film and a first ceramic coating. The first ceramic coating is located on at least one surface of the first base film on a side. The "first ceramic coating is located on at least one surface of the first base film on a side" means that the first ceramic coating is disposed on one side of the first base film or on both sides of the first base film. The first base film is a nonwoven fabric film. The first ceramic coating includes first ceramic particles. The first ceramic particles include at least one of aluminum oxide, zirconium dioxide, titanium dioxide, or silicon dioxide. The second separator includes a second base film and a second ceramic coating. The second ceramic coating is located on at least one surface of the second base film on a side. The "second ceramic coating is located on at least one surface of the second base film on a side" means that the second ceramic coating is disposed on one side of the second base film or on both sides of the second base film. The second base film is a microporous film. The second ceramic coating includes second ceramic particles. The second ceramic particles include boehmite.

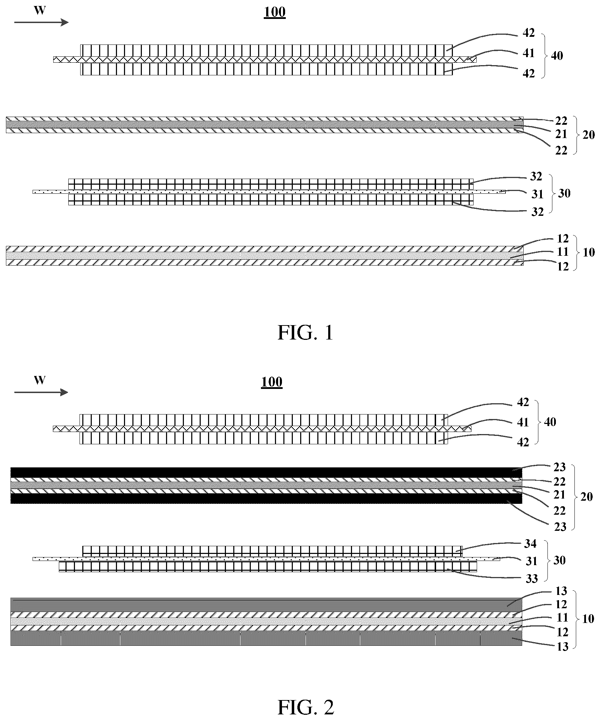

In this application, the structure of the electrode assembly is a jelly-roll structure. The winding direction of the electrode assembly is defined as W. A person skilled in the art understands that the winding direction of the positive electrode plate, the negative electrode plate, the first separator, and the second separator is the same as the winding direction of the electrode assembly. To facilitate understanding of the positional relationship between the positive electrode plate, the negative electrode plate, the first separator, and the second separator in the electrode assembly, FIG. 1 shows a schematic diagram of a partial structure of the electrode assembly unwound along the winding direction W. As shown in FIG. 1, the electrode assembly 100 includes a first separator 10, a second separator 20, a negative electrode plate 30, and a positive electrode plate 40. The first separator 10 includes a first base film 11 and a first ceramic coating 12. The first ceramic coating 12 is located on surfaces of the first base film on both sides. The second separator 20 includes a second base film 21 and a second ceramic coating 22. The second ceramic coating 22 is located on surfaces of the second base film 21 on both sides.

The ceramic particles in the ceramic coating in an existing separator are typically classed into two types: oxide and boehmite, both exerting a great impact on the performance of secondary batteries. The oxide-containing ceramic coating is highly wettable and highly capable of absorbing and retaining an electrolyte solution, thereby improving the cycle performance of the secondary battery. However, the oxide is of high hardness, causes great wear on a machine, and gives rise high cost of equipment. In addition, the oxide possesses a large specific gravity and is not flame retardant, thereby being adverse to the energy density and safety of the secondary battery. Compared with oxides, boehmite is of low hardness, high heat resistance, low density, and good adhesiveness, and can improve the heat resistance and puncture resistance of the separator and improve the safety performance and energy density of the secondary battery. However, boehmite is not much wettable by an electrolyte solution, and is adverse to electrolyte solution retention and the cycle performance of the secondary battery. The microporous film is typically prepared from a material such as polyolefin by a wet process or a dry process by means of uniaxial stretching or biaxial stretching, or by a thermally induced phase separation method. The microporous film is inexpensive and is of relatively high mechanical strength and chemical stability, and is relatively resistant to organic solvents. In addition, the thickness of the microporous film is typically small. When the microporous film is applied to a secondary battery, the thickness expansion rate of the secondary battery is relatively low during cycling. However, the microporous film is not resistant to high temperature. During charge and discharge of the secondary battery, when the internal temperature of the secondary battery reaches approximately 60 °C, due to the intercalation and deintercalation of lithium ions, the positive electrode plate and the negative electrode plate expand and shrink to generate internal stress. The internal stress is transmitted to the microporous film to squeeze the microporous film, thereby reducing the porosity gradually, making it difficult to intercalate and deintercalate lithium ions, and deteriorating the cycle performance of the secondary battery. In addition, the reduced porosity of the microporous film makes it difficult to dissipate the heat inside the secondary battery, and results in an excessive temperature rise of the secondary battery, thereby deteriorating the high-temperature thermal abuse performance of the secondary battery. The nonwoven fabric film is of relatively high electrolyte storage performance, and the thermal stability of the nonwoven fabric film is relatively high. With the rise of the internal temperature of the secondary battery during charge and discharge, the nonwoven fabric film maintains a relatively high porosity in addition to relatively high mechanical strength, thereby contributing to smooth flow of the electrolyte solution and improving the transmission rate of lithium ions. However, the thickness of the nonwoven fabric film is usually large, and is prone to impair the energy density of the secondary battery.

This application uses the first base film as a nonwoven fabric, with a relatively high glass transition temperature and good thermal stability. With the rise of the internal temperature of the secondary battery during charge and discharge, the first base film maintains a relatively high porosity while possessing relatively high mechanical strength. This enables smooth flow of an electrolyte solution and improves the transmission rate of lithium ions. The stable void structure of the first base film can also improve the capabilities of absorbing and retaining the electrolyte solution. However, the thickness of the first base film is relatively large. The first base film used in combination with an oxide ceramic coating makes up for the disadvantage that the heat resistance of the oxide ceramic coating is relatively low, and contributes to relatively high stability of the first separator at high temperature. In addition, the high electrolyte retainability of the first base film and the high electrolyte retainability of the oxide ceramic coating are added up to further improve the cycle performance of the secondary battery. The second base film is a microporous film with a relatively low glass transition temperature. A relatively thin second base film can be prepared by a wet process or a dry process by means of uniaxial stretching or biaxial stretching, so as to compensate for the energy density loss caused by the relatively thick first base film. The second base film coordinates with the second ceramic coating of a high heat resistance and a high puncture resistance, and the second ceramic coating can more effectively prevent the second base film from shrinking or closing pores at high temperature, thereby endowing the second separator with high safety. Therefore, the above type of first base film is used in combination with the first ceramic particles to prepare the first separator, and the above type of second base film is used in combination with the second ceramic particles to prepare the second separator. The advantages of different materials of the separators can be exerted effectively when the first separator and the second separator are used in combination. The first separator and the second separator are of relatively high mechanical strength, and can effectively slow down the shrinkage of the first separator and the second separator during cycling of the secondary battery, reduce the thickness of the secondary battery, and in turn, increase the energy density of the secondary battery and improve the high-temperature thermal abuse performance of the secondary battery. In addition, the first separator and the second separator exhibit superior electrolyte storage performance, thereby improving the cycle performance of the secondary battery. Therefore, in the secondary battery of this application, the first separator and the second separator of different types are used in combination, so that the secondary battery is superior in electrolyte storage performance, high-temperature thermal abuse performance, and cycle performance.

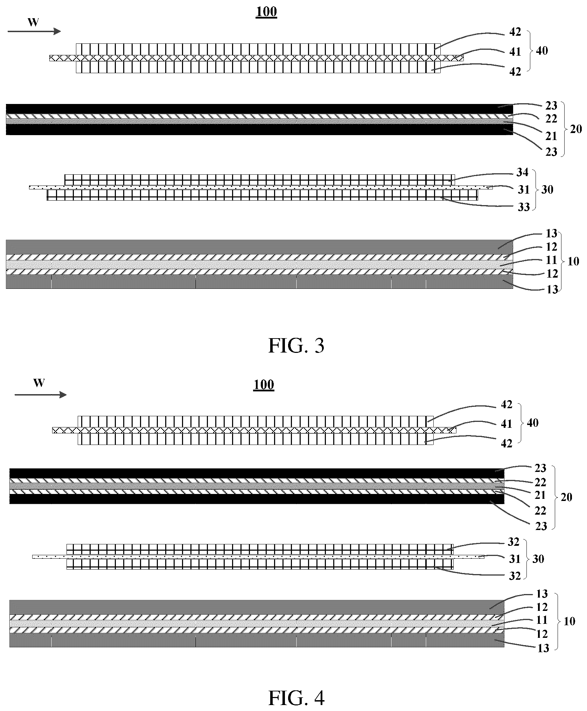

In an embodiment of this application, as shown in FIG. 2 and FIG. 3, the negative electrode plate 30 is located between the first separator 10 and the second separator 20. The negative electrode plate 30 includes a negative current collector 31 as well as a first negative electrode material layer 33 and a second negative electrode material layer 34 located on two sides of the negative current collector 31 respectively. Along a winding direction W of the electrode assembly, a length of the first negative electrode material layer 33 is greater than a length of the second negative electrode material layer 34. The first separator 10 is located on the same side as the first negative electrode material layer 33 of the negative electrode plate 30. The second separator 20 is located on the same side as the second negative electrode material layer 34 of the negative electrode plate 30. Through the above arrangement, the porosity of the nonwoven fabric film is relatively high and the average particle diameter of the first ceramic particles, that is, the oxide, is relatively large, thereby contributing to higher wettability of the first separator and higher capabilities of the first separator in absorbing and retaining the electrolyte solution, and making it convenient for the first separator to store more electrolyte solution, and in turn, improving the cycle performance of the secondary battery. When the first separator is located on the same side as the first negative electrode material layer of the negative electrode plate, it is convenient for the A side of the negative electrode plate of the secondary battery to adsorb more electrolyte solution, thereby improving the electrolyte storage performance of the negative electrode plate, facilitating more negative electrode active materials to contact a large amount of electrolyte solution, further improving the cycle performance of the secondary battery, and reducing the risk of lithium plating at the interface between the electrolyte solution and the negative electrode plate caused by electrolyte flow discontinuity at the later stage of cycling of the secondary battery. In addition, the above structure disposed in the secondary battery improves the high-temperature thermal abuse performance of the secondary battery and improvs the cycle performance of the secondary battery while achieving desirable electrolyte storage performance. In this application, the A side of the negative electrode plate means one side, containing the first negative electrode material layer, of the negative electrode plate, that is, the side with a relatively long negative electrode material layer in the negative electrode plate.

In an embodiment of this application, as shown in FIG. 2 and FIG. 3, the negative electrode plate 30 is located between the first separator 10 and the second separator 20. The negative electrode plate 30 includes a negative current collector 31 as well as a first negative electrode material layer 33 and a second negative electrode material layer 34 located on two sides of the negative current collector 31 respectively. Along a winding direction W of the electrode assembly 100, a length of the first negative electrode material layer 33 at both ends is greater than a length of the second negative electrode material layer 34 at both ends. The first separator 10 is located on the same side as the first negative electrode material layer 33 of the negative electrode plate 30. The second separator 20 is located on the same side as the second negative electrode material layer 34 of the negative electrode plate 30. Through the above arrangement, the porosity of the nonwoven fabric film is relatively high and the average particle diameter of the first ceramic particles, that is, the oxide, is relatively large, thereby contributing to higher wettability of the first separator and higher capabilities of the first separator in absorbing and retaining the electrolyte solution, and making it convenient for the first separator to store more electrolyte solution, and in turn, improving the cycle performance of the secondary battery. When the first separator is located on the same side as the first negative electrode material layer of the negative electrode plate, it is convenient for the A side of the negative electrode plate of the secondary battery to adsorb more electrolyte solution, thereby improving the electrolyte storage performance of the negative electrode plate, facilitating more negative electrode active materials to contact a large amount of electrolyte solution, further improving the cycle performance of the secondary battery, and reducing the risk of lithium plating at the interface between the electrolyte solution and the negative electrode plate caused by electrolyte flow discontinuity at the later stage of cycling of the secondary battery. In addition, the above structure disposed in the secondary battery improves the high-temperature thermal abuse performance of the secondary battery and improvs the cycle performance of the secondary battery while achieving desirable electrolyte storage performance.

In some embodiments of this application, the negative electrode plate includes a negative current collector as well as a first negative electrode material layer and a second negative electrode material layer located on two sides of the negative current collector respectively. Along a winding direction of the electrode assembly, one end of the first negative electrode material layer is flush with one end of the second negative electrode material layer. The length of the first negative electrode material layer at the other end is greater than the length of the second negative electrode material layer at the other end. The first separator is located on the same side as the first negative electrode material layer of the negative electrode plate. The second separator is located on the same side as the second negative electrode material layer of the negative electrode plate. Through the above arrangement, the porosity of the nonwoven fabric film is relatively high and the average particle diameter of the first ceramic particles, that is, the oxide, is relatively large, thereby contributing to higher wettability of the first separator and higher capabilities of the first separator in absorbing and retaining the electrolyte solution, and making it convenient for the first separator to store more electrolyte solution, and in turn, improving the cycle performance of the secondary battery. When the first separator is located on the same side as the first negative electrode material layer of the negative electrode plate, it is convenient for the A side of the negative electrode plate of the secondary battery to adsorb more electrolyte solution, thereby improving the electrolyte storage performance of the negative electrode plate, facilitating more negative electrode active materials to contact a large amount of electrolyte solution, further improving the cycle performance of the secondary battery, and reducing the risk of lithium plating at the interface between the electrolyte solution and the negative electrode plate caused by electrolyte flow discontinuity at the later stage of cycling of the secondary battery. In addition, the above structure disposed in the secondary battery improves the high-temperature thermal abuse performance of the secondary battery and improvs the cycle performance of the secondary battery while achieving desirable electrolyte storage performance.

In an embodiment of this application, as shown in FIG. 1 and FIG. 4, the negative electrode plate 30 includes a negative current collector 31 and a negative electrode material layer 32 located on both sides of the negative current collector 31. Along a winding direction W of the electrode assembly, the length of the negative electrode material layer 32 at one end of the negative current collector 31 is equal to the length of the negative electrode material layer at the other end. The above arrangement reduces the thickness of the secondary battery, and in turn, increases the energy density of the secondary battery, and improves the electrolyte storage performance, cycle performance, and high-temperature thermal abuse performance of the secondary battery.

In an embodiment of this application, a material of the first base film includes polyethylene terephthalate, and a material of the second base film includes at least one of polypropylene or polyethylene. When the first base film and the second base film are made of the materials specified above, a dual-separator structure including a first separator and a second separator is disposed in the secondary battery, thereby reducing the thickness of the secondary battery, and in turn, increasing the energy density of the secondary battery. In addition, the secondary battery is superior in electrolyte storage performance, cycle performance, and high-temperature thermal abuse performance.

In an embodiment of this application, the materials of the first base film include at least one of polyimide, polyamide, polysulfone, polyacrylonitrile, polyester, cellulose, polyetheretherketone, polyphenylene sulfide, polyacrylate ester, polyethylene terephthalate (PET), poly(p-benzamide), polyarylethersulfoneketone, aramid fiber, or poly(aromatic sulfone)fiber; and the materials of the second base film include polyolefin. The polymerization monomers of the polyolefin include at least one of ethylene, propylene, 1-butene, 1-pentene, 1-hexene, 1-octene, 4-methyl-1-pentene, cyclobutene, cyclopentene, or cyclohexene. For example, the material of the second base film may include at least one of polyethylene, polypropylene, poly-1-butene, poly-1-pentene, poly-1-hexene, poly-1-octene, poly-4-methyl-1-pentene, polycyclobutene, polycyclopentene, polycyclohexene, or poly(ethylene-co-propylene). When the first base film and the second base film are made of the materials specified above, a dual-separator structure including a first separator and a second separator is disposed in the secondary battery, thereby reducing the thickness of the secondary battery, and in turn, increasing the energy density of the secondary battery. In addition, the secondary battery is superior in electrolyte storage performance, cycle performance, and high-temperature thermal abuse performance.

The weight-average molecular weight of the material of the first base film is not particularly limited herein, as long as the objectives of this application can be achieved. For example, the weight-average molecular weight of the material of the first base film is 2×10⁵ to 1.5×10⁶. The weight-average molecular weight of the material of the second base film is not particularly limited herein, as long as the objectives of this application can be achieved. For example, the weight-average molecular weight of the material of the second base film is 2×10⁵ to 1.5×10⁶. The method for preparing the microporous film is not particularly limited herein, as long as the objectives of this application can be achieved. For example, the microporous film is prepared from a material falling within the range specified herein by a wet process or a dry process by means of uniaxial stretching or biaxial stretching, or by a thermally induced phase separation method. The method for preparing the nonwoven fabric film is not particularly limited herein, as long as the objectives of this application can be achieved. For example, the nonwoven fabric film may be prepared from a material falling within the range specified herein by at least one of the following methods: meltblowing, spunbonding, wet papermaking, hydroentangling, needlepunching, or hot rolling. In this application, understandably, the material of the nonwoven fabric film is the material of the first base film, and the material of the microporous film is the material of the second base film. Alternatively, a nonwoven fabric film and a microporous film of different materials, which are commercially available, are selected, and the first base film and the second base film of desired materials are selected. The materials are not particularly limited herein, as long as the objectives of this application can be achieved.

In an embodiment of this application, as shown in FIG. 2 to FIG. 4, the first separator 10 further includes a first bonding layer 13, and/or the second separator 20 further includes a second bonding layer 23. The first bonding layer 13 includes a first binder. The second bonding layer 23 includes a second binder. The first binder and the second binder each are at least one independently selected from polyvinylidene fluoride, polyacrylonitrile, polyethylene oxide, or polyimide. By disposing the first bonding layer and the second bonding layer and selecting the above types of first binder and second binder, this application increases the adhesion between the first separator and the positive electrode plate, between the first separator and the negative electrode plate, between the second separator and the positive electrode plate, and between the second separator and the negative electrode plate, and strengthens the interface between the first separator and the positive electrode plate, the interface between the first separator and the negative electrode plate, the interface between the second separator and the positive electrode plate, and the interface between the second separator and the negative electrode plate. This is conducive to the transmission of lithium ions, reduces the probability of detachment of the first ceramic coating and the second ceramic coating, reduces the thickness of the secondary battery, and in turn, increases the energy density of the secondary battery, and improves the cycle performance of the secondary battery. In this way, the secondary battery is superior in electrolyte storage performance, cycle performance, and high-temperature thermal abuse performance. The weight-average molecular weight of the first binder and the weight-average molecular weight of the second binder are not particularly limited herein, as long as the objectives of this application can be achieved. For example, the weight-average molecular weight of the first binder and the second binder may be 1.5×10⁴ to 9×10⁶.

In an embodiment of this application, as shown in FIG. 3, the second separator 20 is located between the positive electrode plate 40 and the negative electrode plate 30. The first ceramic coating 12 is located on both sides of the first base film 11. The first ceramic particles include aluminum oxide. The second ceramic coating 22 is located on just one side of the second base film 21, the side facing away from the negative electrode plate 30. The second ceramic particles include boehmite. With the second ceramic coating disposed on one side of the second base film, the side facing away from the negative electrode plate, the probability of separator piercing is reduced. Because the positive active material particles on the positive electrode plate are relatively hard, some positive active material particles that are relatively large-sized or pointy protrude from the positive electrode plate occasionally. In a process of producing or using the secondary battery, such positive active material particles are prone to pierce the separator between the positive electrode plate and the negative electrode plate and cause contact and short-circuiting between the positive electrode plate and the negative electrode plate. The second ceramic coating on the second separator is disposed on just one side of the second base film, the side facing away from the negative electrode plate. In other words, the second ceramic coating faces the positive electrode plate. The boehmite can improve the puncture resistance of the separator, thereby reducing the probability of the positive active material particles piercing the separator, and protecting the second base film more securely. In addition, a single-layer second ceramic coating can reduce cost and increase the energy density of the secondary battery while further improving the safety performance of the secondary battery.

In an embodiment of this application, an average particle diameter D₁ of the first ceramic particles is 0.2 µm to 1.2 µm, and an average particle diameter D₂ of the second ceramic particles is 0.1 µm to 1.0 µm. For example, the average particle diameter D₁ of the first ceramic particles may be 0.2 µm, 0.4 µm, 0.6 µm, 0.8 µm, 1.0 µm, 1.2 µm, or a value falling within a range formed by any two thereof; and the average particle diameter D₂ of the second ceramic particles may be 0.1 µm, 0.2 µm, 0.3 µm, 0.4 µm, 0.5 µm, 0.6 µm, 0.7 µm, 0.8 µm, 0.9 µm, 1.0 µm, or a value falling within a range formed any two thereof. The average particle diameter of the first ceramic particles and the average particle diameter of the second ceramic particles are controlled to fall within the above ranges, so that the first ceramic particles and the second ceramic particles possess a relatively large specific surface area, thereby increasing the electrolyte retention amount of the first separator and the second separator, and in turn, improving the electrolyte storage performance of the first separator and the second separator, and improving the cycle performance of the secondary battery. In this way, the secondary battery is superior in electrolyte storage performance, cycle performance, and high-temperature thermal abuse performance. The methods for adjusting and controlling the average particle diameter D₁ of the first ceramic particles and the average particle diameter D₂ the second ceramic particles are not particularly limited herein, as long as the objectives of this application can be achieved. For example, the average particle diameters may be adjusted and controlled by pulverization and sieving.

In an embodiment of this application, the coating weight CW1 of the first ceramic coating is 9 mg/cm² to 12 mg/cm², and the coating weight CW2 of the second ceramic coating is 9 mg/cm² to 12 mg/cm². For example, the coating weight CW₁ of the first ceramic coating may be 9 mg/cm², 9.2 mg/cm², 9.5 mg/cm², 9.7 mg/cm², 10 mg/cm², 10.2 mg/cm², 10.5 mg/cm², 10.7 mg/cm², 11 mg/cm², 11.2 mg/cm², 11.5 mg/cm², 11.7 mg/cm², 12 mg/cm², or a value falling within a range formed by any two thereof; and the coating weight CW₂ of the second ceramic coating may be 9 mg/cm², 9.2 mg/cm², 9.5 mg/cm², 9.7 mg/cm², 10 mg/cm², 10.2 mg/cm², 10.5 mg/cm², 10.7 mg/cm², 11 mg/cm², 11.2 mg/cm², 11.5 mg/cm², 11.7 mg/cm², 12 mg/cm², or a value falling within a range formed by any two thereof. Controlling the coating weight CW₁ of the first ceramic coating and the coating weight CW₂ of the second ceramic coating to fall within the above ranges can improve the thermal stability and strength of the first separator and the second separator, improve the mechanical properties of the separators, reduce the probability of large-area contact between the positive electrode plate and the negative electrode plate caused by the shrinkage of the first separator and/or the second separator during charge and discharge of the secondary battery, improve the ability of the ceramic coatings to bind the first separator and the second separator, reduce the thickness of the secondary battery, and in turn, increase the energy density of the secondary battery, and improve the high-temperature thermal abuse performance of the secondary battery. In addition, the first ceramic coating and the second ceramic coating can absorb a part of the electrolyte solution, and therefore, controlling the coating weight of the first ceramic coating and the coating weight of the second ceramic coating to fall within the above ranges can increase the electrolyte retention amount of the first separator and the second separator, thereby improving the electrolyte storage performance of the first separator and the second separator. In this way, the secondary battery is superior in electrolyte storage performance, cycle performance, and high-temperature thermal abuse performance. In this application, the coating weight of the first ceramic coating and the coating weight of the second ceramic coating may be adjusted by a method known to a person skilled in the art. For example, when the first ceramic coating slurry is applied onto the surface of the first base film, with the solid content of the first ceramic coating slurry being constant, the coating amount of the first ceramic coating slurry is increased to increase the coating weight of the first ceramic coating; when the second ceramic coating slurry is applied onto the surface of the second base film, with the solid content of the second ceramic coating slurry being constant, the coating amount of the second ceramic coating slurry is increased to increase the coating weight of the second ceramic coating. The adjustment method is not particularly limited herein, as long as the objectives of this application can be achieved.

In an embodiment of this application, the first ceramic coating further includes a first binder. The first binder includes at least one of a water-soluble acrylic copolymer, a water-based acrylate ester copolymer emulsion, polyvinyl alcohol, or polyvinyl pyrrolidone. Based on the mass of the first ceramic coating, the mass percent W₁ of the first binder is 5% to 20%. For example, the mass percent W₁ of the first binder may be 5%, 5.3%, 6.5%, 7.0%, 9.0%, 10%, 12%, 15%, 17%, 18%, 19.5%, 20%, or a value falling within a range formed by any two thereof. The second ceramic coating further includes a second binder. The second binder includes at least one of a water-soluble acrylic copolymer, a water-based acrylate ester copolymer emulsion, polyvinyl alcohol, or polyvinyl pyrrolidone. Based on the mass of the second ceramic coating, the mass percent W₂ of the second binder is 2% to 15%. For example, the mass percent W₂ of the second binder may be 2%, 4%, 5%, 7%, 10%, 12%, 15%, or a value falling within a range formed by any two thereof. When the above types of first binder and second binder are selected and the mass percentages of the first binder and the second binder are controlled within the above ranges, the adhesion between the first ceramic particles is increased, and the adhesion between the second ceramic particles is increased, thereby increasing the mechanical strength of the first ceramic coating and the second ceramic coating, improving the electrolyte storage performance of the first separator and the second separator, reducing the thickness of the secondary battery, and in turn, increasing the energy density of the secondary battery. In this way, the secondary battery is superior in electrolyte storage performance, cycle performance, and high-temperature thermal abuse performance.

In an embodiment of this application, a thickness of the first base film is 10 µm to 15 µm, and a thickness of the second base film is 3 µm to 9 µm. For example, the thickness h₁ of the first base film may be 10 µm, 11 µm, 12 µm, 13 µm, 14 µm, 15 µm, or a value falling within a range formed any two thereof; and the thickness h₂ of the second base film may be 3 µm, 5 µm, 6 µm, 7 µm, 8 µm, 9 µm, or a value falling within a range formed any two thereof. Controlling the thickness of the first base film and the thickness of the second base film to fall within the above ranges can reduce the risk that the lithium dendrites generated during the cycling of the secondary battery pierce the second base film and cause a short circuit in the secondary battery, endow the first base film and the second base film with relatively high mechanical strength, reduce the thickness of the secondary battery, and in turn, increase the energy density of the secondary battery, and moreover, make the lithium-ion transmission distance moderate during the cycling of the secondary battery, and improve the electrolyte storage performance of the first separator and the second separator. In this way, the secondary battery is superior in electrolyte storage performance, cycle performance, and high-temperature thermal abuse performance.

In an embodiment of this application, the first bonding layer may include a first thickener, and the second bonding layer may further include a second thickener. Applying the first thickener to the first bonding layer and applying the second thickener to the second bonding layer can increase the stability of the first bonding layer slurry and the second bonding layer slurry, and prevent the sedimentation of each constituent in the first bonding layer slurry and the second bonding layer slurry. The types of the first thickener and the second thickener are not particularly limited herein, as long as the objectives of this application can be achieved. For example, the first thickener and the second thickener each independently are at least one selected from hydroxyethyl cellulose, methyl hydroxyethyl cellulose, sodium carboxymethyl cellulose, polyacrylamide, or sodium alginate. The content of the first thickener in the first bonding layer and the content of the second thickener in the second bonding layer are not particularly limited herein, and may be selected by a person skilled in the art as actually required, as long as the objectives of this application can be achieved.

The method for preparing the first separator is not particularly limited herein, as long as the objectives of this application can be achieved. In an embodiment of this application, the preparation method of the first separator may include, but is not limited to, the following steps: (1) mixing the first ceramic particles with the first binder well to obtain a first ceramic coating slurry; (2) applying the first ceramic coating slurry onto one surface of the first base film, and oven-drying the slurry to obtain a first separator coated with the first ceramic coating on a single side; and (4) repeating the above steps on the other surface of the first base film to obtain a first separator.

In another embodiment of this application, the preparation method of the first separator may include, but is not limited to, the following steps: (1) mixing the first binder with the first thickener well to obtain a first bonding layer slurry; (2) mixing the first ceramic particles with the first binder well to obtain a first ceramic coating slurry; (3) applying the first ceramic coating slurry onto one surface of a first base film, oven-drying the slurry to form a first ceramic coating on one surface of the first base film, applying the first bonding layer slurry onto a surface of the first ceramic coating on a side away from the first base film, oven-drying the slurry to obtain a first separator coated with the first ceramic coating and the first bonding layer on one side; and (4) repeating the above steps on the other surface of the first base film to obtain a first separator. After step (3) above, the other surface of the first base film may be coated with only the first bonding layer slurry instead, and then oven-dried to obtain a first separator.

The method for preparing the second separator is not particularly limited herein, as long as the objectives of this application can be achieved. In an embodiment of this application, the preparation method of the second separator may include, but is not limited to, the following steps: (1) mixing the second ceramic particles with the second binder well to obtain a second ceramic coating slurry; (2) applying the second ceramic coating slurry onto one surface of the second base film, and oven-drying the slurry to obtain a second separator coated with the second ceramic coating on a single side; and (4) repeating the above steps on the other surface of the second base film to obtain a second separator.

In another embodiment of this application, the preparation method of the second separator may include, but is not limited to, the following steps: (1) mixing a second binder with a second thickener well to obtain a second bonding layer slurry; (2) mixing second ceramic particles with the second binder well to obtain a second ceramic coating slurry; (3) applying the second ceramic coating slurry onto one surface of a second base film, oven-drying the slurry to form a second ceramic coating on one surface of the second base film, applying the second bonding layer slurry onto a surface of the second ceramic coating on a side away from the second base film, oven-drying the slurry to obtain a second separator coated with the second ceramic coating and the second bonding layer on one side; and (4) repeating the above steps on the other surface of the second base film to obtain a second separator. After step (3) above, the other surface of the second base film may be coated with only the second bonding layer slurry instead, and then oven-dried to obtain a second separator.

The negative current collector is not particularly limited herein, as long as the objectives of this application can be achieved. For example, the negative current collector may be copper foil, copper alloy foil, nickel foil, stainless steel foil, titanium foil, foamed nickel, foamed copper, a composite current collector (such as a lithium-copper composite current collector, a carbon-copper composite current collector, a nickel-copper composite current collector, or a titanium-copper composite current collector), or the like. The negative electrode material layer or the first negative electrode material layer and the second negative electrode material layer of this application each contain a negative active material. The type of the negative active material is not particularly limited in this application, as long as the objectives of this application can be achieved. For example, the negative active material may include at least one of natural graphite, artificial graphite, mesocarbon microbeads (MCMB), hard carbon, soft carbon, silicon, a silicon-carbon composite, SiOₓ(0 < x < 2), Li-Sn alloy, Li-Sn-O alloy, Sn, SnO, SnO₂, spinel-structured lithium titanium oxide Li₄Ti₅O₁₂, Li-Al alloy, or metallic lithium. The thicknesses of the negative current collector and the negative electrode material layer are not particularly limited herein, as long as the objectives of this application can be achieved. For example, the thickness of the negative current collector is 4 µm to 15 µm, the thickness of the negative electrode material layer on a single side of the current collector is 30 µm to 130 µm, the thickness of the first negative electrode material layer is 30 µm to 130 µm, and the thickness of the second negative electrode material layer is 30 µm to 130 µm. Optionally, the negative electrode material layer, the first negative electrode material layer, and the second negative electrode material layer each may further include a conductive agent and a negative electrode binder. The types of the conductive agents in the negative electrode material layer, the first negative electrode material layer, and the second negative electrode material layer are not particularly limited herein, as long as the objectives of this application can be achieved. For example, the conductive agent may include, but is not limited to, at least one of conductive carbon black (Super P), carbon nanotubes (CNTs), carbon fibers, flake graphite, Ketjen black, graphene, a metal material, or a conductive polymer. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. The types of the negative electrode binders in the negative electrode material layer, the first negative electrode material layer, and the second negative electrode material layer are not particularly limited herein, as long as the objectives of this application can be achieved. For example, the negative electrode binder may include, but is not limited to, at least one of polyvinylidene fluoride, poly(vinylidene fluoride-co-hexafluoropropylene), polyamide, polyacrylonitrile, polyacrylate, polyacrylic acid, polyacrylic acid sodium salt, polyvinylpyrrolidone, polyvinyl ether, polymethyl methacrylate, polytetrafluoroethylene, or polyhexafluoropropylene. The mass ratio between the negative active material, conductive agent, and negative electrode binder in the negative electrode material layer, the first negative electrode material layer, and the second negative electrode material layer is not particularly limited herein, as long as the objectives of this application can be achieved.

In this application, the positive electrode plate is not particularly limited, as long as the objectives of this application can be achieved. In an embodiment of this application, the positive electrode plate includes a positive current collector and a positive electrode material layer disposed on at least one surface of the positive current collector. "Positive electrode material layer disposed on at least one surface of the positive current collector" means that the positive electrode material layer may be disposed on one surface of the positive current collector or on both surfaces of the positive electrode current collector along the thickness direction of the current collector. It is hereby noted that the "surface" here may be the entire region of the surface of the positive current collector, or a partial region of the surface of the positive current collector, without being particularly limited herein, as long as the objectives of the application can be achieved. As an example, as shown in FIG. 1 to FIG. 4, a positive electrode plate 40 includes a positive current collector 41 and a positive electrode material layer 42 disposed on both surfaces of the positive current collector 41. The positive current collector is not particularly limited herein, as long as the objectives of this application can be achieved. For example, the positive current collector may include aluminum foil, aluminum alloy foil, a composite current collector (such as an aluminum carbon composite current collector), or the like. The positive electrode material layer of this application includes a positive active material. The type of the positive active material is not particularly limited herein, as long as the objectives of this application can be achieved. For example, the positive active material may include at least one of lithium nickel cobalt manganese oxide (NCM811, NCM622, NCM523, NCM111), lithium nickel cobalt aluminum oxide, lithium iron phosphate, a lithium-rich manganese-based material, lithium cobalt oxide (LiCoO₂), lithium manganese oxide, lithium manganese iron phosphate, lithium titanium oxide, or the like. In this application, the positive active material may further include a non-metal element. For example, the non-metal element includes at least one of fluorine, phosphorus, boron, chlorine, silicon, or sulfur. The thicknesses of the positive current collector and the positive electrode material layer are not particularly limited herein, as long as the objectives of this application can be achieved. For example, the thickness of the positive current collector is 9 µm to 15 µm. The thickness of the positive electrode material layer on a single side is 30 µm to 120 µm. In this application, the positive electrode material layer may further include a conductive agent and a positive electrode binder. The type of the binder in the positive electrode material layer is not particularly limited herein, as long as the objectives of this application can be achieved. For example, the positive electrode binder may be of the same type as the negative electrode binders in the negative electrode material layer, the first negative electrode material layer, and the second negative electrode material layer. The type of the conductive agent in the positive electrode material layer is not particularly limited herein, as long as the objectives of this application can be achieved. The conductive agent may be of the same type as the conductive agents in the negative electrode material layer, the first negative electrode material layer, and the second negative electrode material layer. The mass ratio between the positive active material, the conductive agent, and the positive electrode binder in the positive electrode material layer is not particularly limited herein, and may be selected by a person skilled in the art as actually required, as long as the objectives of this application can be achieved.

The secondary battery in this application includes an electrolyte solution. The electrolyte solution includes a lithium salt and a nonaqueous solvent. The lithium salt may include at least one of LiPF₆, LiNO₃, LiBF₄, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), lithium bis(trifluoromethanesulfonyl)imide (LiTFSI), or lithium difluoroborate. The content of the lithium salt in the electrolyte solution is not particularly limited herein, as long as the objectives of this application can be achieved. The nonaqueous solvent is not particularly limited herein, as long as the objectives of this application can be achieved. For example, the nonaqueous solvent includes, but is not limited to, at least one of a carbonate ester compound, a carboxylate ester compound, an ether compound, or another organic solvent. The carbonate compound may include, but is not limited to, at least one of a chain carbonate compound, a cyclic carbonate compound, or a fluorocarbonate compound. The chain carbonate compound may include, but is not limited to, at least one of dimethyl carbonate, diethyl carbonate, dipropyl carbonate, methyl propyl carbonate, ethylene propyl carbonate, or ethyl methyl carbonate. The cyclic carbonate compound may include, but is not limited to, at least one of ethylene carbonate, propylene carbonate (PC), butylene carbonate, or vinyl ethylene carbonate. The fluorocarbonate compound may include, but is not limited to, at least one of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The secondary battery of this application further includes a packaging bag. The packaging bag is configured to accommodate a positive electrode plate, a negative electrode plate, a separator, an electrolyte solution, and other components known in the art for use in a secondary battery. Such other components are not limited herein. The packaging bag is not particularly limited herein, and may be a packaging bag well-known in the art, as long as the objectives of this application can be achieved.

The secondary battery is not particularly limited in this application, and may be any device in which an electrochemical reaction occurs. In an embodiment of this application, the secondary battery may be, but is not limited to, a lithium-ion secondary battery (lithium-ion battery), a lithium polymer secondary battery, a lithium-ion polymer secondary battery, or the like.

The method for preparing the secondary battery is not particularly limited herein, and may be any preparation method well-known in the art, as long as the objectives of this application can be achieved. For example, the method for preparing the secondary battery includes, but is not limited to, the following steps: stacking the positive electrode plate, the second separator, the negative electrode plate, and the first separator in sequence, and performing operations such as winding and folding as required on the stacked structure to obtain a jelly-roll electrode assembly; putting the electrode assembly into a packaging bag, injecting an electrolyte solution into the packaging bag, and sealing the package bag to obtain a secondary battery.

A second aspect of this application provides an electronic device. The electronic device includes the secondary battery disclosed in any one of the preceding embodiments. The secondary battery of this application exhibits a relatively low expansion rate during cycling, and is superior in electrolyte storage performance, high-temperature thermal abuse performance, and cycle performance. Therefore, the electronic device of this application possesses a relatively long service life.

The electronic device is not particularly limited herein, and may be any electronic device known in the prior art. For example, the electronic device may include, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, or lithium-ion capacitor.

### Embodiments

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test methods and devices

### Method for sampling first separators and second separators

Disassembling a lithium-ion battery in each embodiment and comparative embodiment to be tested, taking out a first separator and a second separator, and soaking the separators in dimethyl carbonate (DMC) for 20 minutes to remove residual electrolyte solution. Subsequently, drying the first separator and the second separator in an oven at 60 °C for 12 hours to obtain a first separator sample and a second separator sample. The samples of the first separator and the second separator are obtained by the above method in the following tests to determine the average particle diameters of the first ceramic particles and the second ceramic particles and determine the thicknesses of the first base film and the second base film.

### Determining the average particle diameters of the first ceramic particles and the second ceramic particles

Sectioning the first separator or the second separator along a thickness direction of the separator by argon ion polishing to obtain a cross-section of the separator. Observing the cross-section of the first separator or the second separator by using a scanning electron microscope (SEM). Measuring the equivalent diameter of 10 first ceramic particles and the equivalent diameter of 10 second ceramic particles separately (that is, for a particle with an irregular cross-section, the equivalent diameter is the diameter of a circle of the same area as the particle). Averaging out the measured values to obtain an average particle diameter of the first ceramic particles or the average particle diameter of the second ceramic particles.

### Determining the thicknesses of the first base film and the second base film

Performing argon ion beam cross-section polishing on the first separator to obtain a cross-section of the first separator, and observing the morphology of the cross-section of the first separator along the thickness direction by using a field emission scanning electron microscope (XL-30, from Philips), and capturing a scanning electron microscope image. Measuring the thickness h₁ of the first base film by using the scanning electron microscope.

Performing argon ion beam cross-section polishing on the second separator to obtain a cross-section of the second separator, and observing the morphology of the cross-section of the second separator along the thickness direction by using a field emission scanning electron microscope (XL-30, from Philips), and capturing a scanning electron microscope image. Measuring the thickness h₂ of the second base film by using the scanning electron microscope.

### Determining the thickness of the lithium-ion battery

Adjusting, by adding or removing a weight, the test pressure to 600 g, placing a 3 mm gauge block onto a loading platform, pressing the white buttons on both sides of the instrument so that the parallel plate gauge (PPG battery thickness gauge) automatically feeds the gauge block into the instrument and tests the thickness. Measuring any 9 points in sequence, with a calibration tolerance of ±0.02 mm. Using only the item that falls within the specification range. Holding the lithium-ion battery with one hand, placing the battery on the loading platform with the barcode facing up. Scanning the barcode first, and then pressing the white buttons on both sides so that the instrument automatically feeds the lithium-ion battery for testing. Recording the test result, that is, the thickness of the lithium-ion battery.

The thickness of the lithium-ion battery characterizes the energy density of the lithium-ion battery. For lithium-ion batteries of the same volume, a larger thickness represents a lower energy density.

### High-temperature hot-oven test

Charging a lithium-ion battery at 25 °C at a constant current of 2C until the voltage reaches 4.5 V, and then charging the battery at a constant voltage of 4.5 V until the current tapers off to 0.02C. Subsequently, leaving the lithium-ion battery to stand for 5 minutes in a test chamber ventilated with air at a temperature of 25 °C and a humidity of 80%, and then heating the test chamber to 130 °C at a rate of 5 °C/min. Keeping the temperature constant at 130 °C for 10 minutes, and then checking whether the lithium-ion battery catches fire or explodes. Determining that the battery passes the test if the battery does not catch fire or explode. Calculating the 130 °C hot-oven test pass rate as: hot-oven test pass rate = number of batteries passing the 130 °C hot-oven test/10 (total number of batteries tested in 130 °C hot oven).

Charging a lithium-ion battery at 25 °C at a constant current of 2C until the voltage reaches 4.5 V, and then charging the battery at a constant voltage of 4.5 V until the current tapers off to 0.02C. Subsequently, leaving the lithium-ion battery to stand for 5 minutes in a test chamber ventilated with air at a temperature of 25 °C and a humidity of 80%, and then heating the test chamber to 135 °C at a rate of 5 °C/min. Keeping the temperature constant at 135 °C for 10 minutes, and then checking whether the lithium-ion battery catches fire or explodes. Determining that the battery passes the test if the battery does not catch fire or explode. Calculating the 135 °C hot-oven test pass rate as: hot-oven test pass rate = number of batteries passing the 135 °C hot-oven test/10 (total number of batteries tested in 135 °C hot oven).

The safety performance of the lithium-ion battery is represented by the hot-oven test pass rate. The higher the hot-oven test pass rate, the higher the safety performance of the lithium-ion battery, that is, the higher the high-temperature thermal abuse performance.

### Testing the cycle performance

Charging a lithium-ion battery at a constant current of 2C at 25 °C until the voltage reaches 4.5 V, and then charging the battery at a constant voltage of 4.5 V until the current tapers off to 0.02 C. Leaving the battery to stand for 5 minutes, and then discharging the battery at a constant current of 0.7C until the voltage drops to 3.0 V, thereby completing a first cycle. Recording the discharge capacity at this time. Charging and discharging the lithium-ion battery according to the above process until completion of 1000 cycles (cls). Calculating the capacity retention rate as a metric of the cycle performance of the lithium-ion battery. 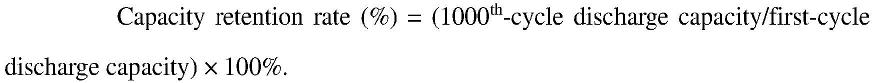 Capacity retention rate (%) = (1000th-cycle discharge capacity/first-cycle discharge capacity) × 100%.

### Embodiment 1-1

### <Preparing a first separator>

Using a nonwoven fabric film as a first base film, where the thickness h₁ of the nonwoven fabric film is 12 µm, and the material of the nonwoven fabric film is polyethylene terephthalate (PET, manufacturer: DuPont, designation: FR543).

Mixing polyvinylidene difluoride (PVDF, with weight-average molecular weight Mw = 8.5 × 10⁶) as a first binder and sodium carboxymethyl cellulose (Mw = 8 × 10⁵) as a thickener at a mass ratio of 98.5: 1.5, adding deionized water as a solvent, and stirring well to form a first bonding layer slurry in which the solid content is 75 wt%.

Mixing aluminum oxide (Al₂O₃) as first ceramic particles and a water-soluble acrylic copolymer (Mw = 5 × 10⁶) as a first binder, adding deionized water as a solvent, and stirring well to form a first ceramic coating slurry in which the solid content is 30 wt%.

Applying the first ceramic coating slurry onto one surface of a first base film, oven-drying the slurry at 60 °C to form a first ceramic coating on one surface of the first base film, applying the first bonding layer slurry onto a surface of the first ceramic coating on a side away from the first base film, oven-drying the slurry at 60 °C to obtain a first separator coated with the first ceramic coating and the first bonding layer on one side. Subsequently, repeating the above steps on the other surface of the first base film to obtain a first separator. The average particle diameter D₁ of the first ceramic particles is 1 µm, and the coating weight CW₁ of the first ceramic coating is 10 mg/cm². Based on the mass of the first ceramic coating, the mass percent W₁ of the first binder is 12.5%.

### <Preparing a second separator>

Using a microporous film as a second base film, where the thickness h₂ of the film is 7 µm, and the material of the microporous film is polypropylene (PP) and polyethylene (PE) mixed at a mass ratio of 1: 1 (manufacturer: Celgard, designation: 2325).

Mixing polyvinylidene difluoride (PVDF, Mw = 8.5 × 10⁶) as a second binder and sodium carboxymethyl cellulose (Mw = 8 × 10⁵) as a second thickener at a mass ratio of 98.5: 1.5, adding deionized water as a solvent, and stirring well to form a second bonding layer slurry in which the solid content is 75 wt%.

Mixing boehmite (γ-AlOOH) as second ceramic particles and a water-based acrylate ester copolymer emulsion (Mw = 6 × 10⁶) as a second binder, adding deionized water as a solvent, and stirring well to form a second ceramic coating slurry in which the solid content is 40 wt%.

Applying the second ceramic coating slurry onto one surface of a second base film, oven-drying the slurry at 60 °C to form a second ceramic coating on one surface of the second base film, applying the second bonding layer slurry onto a surface of the first ceramic coating on a side away from the first base film, oven-drying the slurry at 60 °C to obtain a second separator coated with the second ceramic coating and the second bonding layer on one side. Subsequently, applying the second bonding layer slurry onto the other surface of the second base film, and oven-drying the slurry at 60 °C to obtain a second separator. The average particle diameter D₂ of the second ceramic particles is 0.5 µm, and the coating weight CW₂ of the second ceramic coating is 10 mg/cm². Based on the mass of the second ceramic coating, the mass percent W₂ of the second binder is 10%.

### <Preparing a negative electrode plate>

Mixing artificial graphite as a negative active material, styrene-butadiene rubber, and sodium carboxymethyl cellulose at a mass ratio of 97.6: 1.1: 1.3, adding deionized water as a solvent, and stirring well to obtain a first negative electrode slurry in which the solid content is 70 wt%. At the same time, the first negative electrode slurry also serves as a second negative electrode slurry. Applying the first negative electrode slurry onto one surface of a 6 µm-thick negative current collector copper foil, and oven-drying the slurry at 90 °C to obtain a negative electrode plate coated with a 50 µm-thick first negative electrode material layer. Applying the second negative electrode slurry onto the other surface of the negative current collector copper foil, and oven-drying the slurry to obtain a 106 µm-thick negative electrode plate coated with a 50 µm-thick second negative electrode material layer. Cold-pressing and then cutting the coated negative electrode plate into sheets of 72 mm × 820 mm in size for future use. The compaction density of the first negative electrode material layer is 1.725 g/cm³, and the length of the first negative electrode material layer is 710 mm. The compaction density of the second negative electrode material layer is 1.725 g/cm³, and the length of the second negative electrode material layer is 665 mm.

### <Preparing a positive electrode plate>

Mixing lithium cobalt oxide as a positive active material, conductive carbon black as a conductive agent, and polyvinylidene difluoride (PVDF) as a positive electrode binder at a mass ratio of 95: 2.5: 2.5, and then adding N-methyl pyrrolidone (NMP) as a solvent, stirring well to obtain a positive electrode slurry in which the solid content is 75 wt%. Applying the positive electrode slurry evenly onto one surface of a 10 µm-thick positive current collector aluminum foil, and oven-drying the slurry at 90 °C to obtain a positive electrode plate coated with a 55 µm-thick positive electrode material layer on a single side. Applying the positive electrode slurry onto the other surface of the positive current collector aluminum foil, and oven-drying the slurry to obtain a 120 µm-thick positive electrode plate coated with a 55 µm-thick positive electrode material layer on both sides. Cold-pressing and then cutting the coated positive electrode plate into sheets of 68 mm × 790 mm in size for future use. The compaction density of the positive electrode material layer is 4.245 g/cm³.

### <Preparing an electrolyte solution>

Mixing propylene carbonate (PC), diethyl carbonate (DEC), and ethylene carbonate (EC) at a mass ratio of 1: 1: 1 in a dry argon atmosphere glovebox to form a base solvent, and then adding hexafluorophosphate (LiPF₆) as a lithium salt into the base solvent to dissolve, and stirring well to obtain an electrolyte solution. Based on the mass of the electrolyte solution, the mass percent of LiPF₆ is 14%, and the remainder is the base solvent.

### <Preparing a lithium-ion battery>

Stacking the above-prepared positive electrode plate, second separator, negative electrode plate, and first separator in sequence, and then winding the stacked structure to obtain an electrode assembly. Leading out a positive tab by spot-welding the aluminum foil, and leading out a negative tab by spot-welding the nickel foil. The second ceramic coating in the second separator faces away from the negative electrode plate. The first negative electrode material layer is close to the first separator, and the second negative electrode material layer is close to the second separator. Putting the electrode assembly into an aluminum laminated film, leaving the electrode assembly in an 80 °C vacuum oven for 12 hours to dehydrate, and then injecting the above-prepared electrolyte solution to form a cell. Performing vacuum sealing, standing, chemical formation (charging the cell at a constant current of 0.02C until the voltage reaches 3.5 V, and then charging the cell at a constant current of 0.1C until the voltage reaches 3.9 V), capacity grading, and shaping to obtain a lithium-ion battery.

### Embodiments 1-2 to 1-6

Identical to Embodiment 1-1 except that the relevant preparation parameters are adjusted according to Table 1.

### Embodiment 1-7

Identical to Embodiment 1-1 except that the lithium-ion battery is prepared by the following steps:

### <Preparing a lithium-ion battery>

Stacking the prepared positive electrode plate, second separator, negative electrode plate, and first separator in sequence, and then winding the stacked structure to obtain an electrode assembly. Leading out a positive tab by spot-welding the aluminum foil, and leading out a negative tab by spot-welding the nickel foil. The second ceramic coating in the second separator faces away from the negative electrode plate. The first negative electrode material layer is close to the second separator, and the second negative electrode material layer is close to the first separator. Putting the electrode assembly into an aluminum laminated film, leaving the electrode assembly in an 80 °C vacuum oven for 12 hours to dehydrate, and then injecting the above-prepared electrolyte solution to form a cell. Performing vacuum sealing, standing, chemical formation (charging the cell at a constant current of 0.02C until the voltage reaches 3.5 V, and then charging the cell at a constant current of 0.1C until the voltage reaches 3.9 V), capacity grading, and shaping to obtain a lithium-ion battery.

### Embodiment 1-8

Identical to Embodiment 1-1 except that the second separator is prepared by the following steps:

### <Preparing a second separator>

Using a microporous film as a second base film, where the thickness h₂ of the film is 7 µm, and the material of the microporous film is polypropylene and polyethylene mixed at a mass ratio of 1: 1 (manufacturer: Celgard, designation: 2325).

Mixing polyvinylidene difluoride (PVDF, Mw = 8.5 × 10⁶) as a second binder and sodium carboxymethyl cellulose (Mw = 8 × 10⁵) as a second thickener at a mass ratio of 98.5: 1.5, adding deionized water as a solvent, and stirring well to form a second bonding layer slurry in which the solid content is 75 wt%.

Mixing boehmite (γ-AlOOH) as second ceramic particles and a water-based acrylate ester copolymer emulsion (Mw = 6 × 10⁶) as a second binder, adding deionized water as a solvent, and stirring well to form a second ceramic coating slurry in which the solid content is 40 wt%.

Applying the second ceramic coating slurry onto one surface of a second base film, oven-drying the slurry at 60 °C to form a second ceramic coating on one surface of the second base film, applying the second bonding layer slurry onto a surface of the first ceramic coating on a side away from the first base film, oven-drying the slurry at 60 °C to obtain a second separator coated with the second ceramic coating and the second bonding layer on one side. Subsequently, repeating the above steps on the other surface of the second base film to obtain a second separator. The average particle diameter D₂ of the second ceramic particles is 0.5 µm, and the coating weight CW₂ of the second ceramic coating is 10 mg/cm². Based on the mass of the second ceramic coating, the mass percent W₂ of the second binder is 10%.

### Embodiment 1-9

Identical to Embodiment 1-1 except that the first separator and the second separator are prepared according to the following steps:

### <Preparing a first separator>

Using a nonwoven fabric film as a first base film, where the thickness h₁ of the nonwoven fabric film is 12 µm, and the material of the nonwoven fabric film is polyethylene terephthalate (PET, manufacturer: DuPont, designation: FR543).

Mixing aluminum oxide (Al₂O₃) as first ceramic particles and a water-soluble acrylic copolymer (Mw = 5 × 10⁶) as a first binder, adding deionized water as a solvent, and stirring well to form a first ceramic coating slurry in which the solid content is 30 wt%.

Applying the first ceramic coating slurry onto one surface of the first base film, and oven-drying the slurry at 60 °C to obtain a first separator coated with the first ceramic coating on a single side. Subsequently, repeating the above steps on the other surface of the first base film to obtain a first separator. The average particle diameter D₁ of the first ceramic particles is 1 µm, and the coating weight CW₁ of the first ceramic coating is 10 mg/cm². Based on the mass of the first ceramic coating, the mass percent W₁ of the first binder is 12.5%.

### <Preparing a second separator>

Using a microporous film as a second base film, where the thickness h₂ of the film is 7 µm, and the material of the microporous film is polypropylene (PP) and polyethylene (PE) mixed at a mass ratio of 1: 1 (manufacturer: Celgard, designation: 2325).

Mixing boehmite (γ-AlOOH) as second ceramic particles and a water-based acrylate ester copolymer emulsion (Mw = 6 × 10⁶) as a second binder, adding deionized water as a solvent, and stirring well to form a second ceramic coating slurry in which the solid content is 40 wt%.

Applying the second ceramic coating slurry onto one surface of the second base film, and oven-drying the slurry at 60 °C to obtain a second separator coated with the second ceramic coating on a single side. Subsequently, repeating the above steps on the other surface of the second base film to obtain a second separator. The average particle diameter D₂ of the second ceramic particles is 0.5 µm, and the coating weight CW₂ of the second ceramic coating is 10 mg/cm². Based on the mass of the second ceramic coating, the mass percent W₂ of the second binder is 10%.

### Embodiments 2-1 to 2-11

Identical to Embodiment 1-1 except that the relevant preparation parameters are adjusted according to Table 2. When the coating weight CW₁ of the first ceramic coating changes, the coating amount of the first ceramic coating slurry is adjusted so that CW₁ meets the value specified in Table 2. When the coating weight CW₂ of the second ceramic coating changes, the coating amount of the second ceramic coating slurry is adjusted so that CW₂ meets the value specified in Table 2.

### Embodiments 3-1 to 3-7

Identical to Embodiment 1-1 except that the relevant preparation parameters are adjusted according to Table 3. When the mass percent W₁ of the first binder changes, the mass percent of the first ceramic particles changes accordingly. The aggregate mass percent of the first ceramic particles and the first binder is 100%. When the mass percent W₂ of the second binder changes, the mass percent of the second ceramic particles changes accordingly. The aggregate mass percent of the second ceramic particles and the second binder is 100%.

### Comparative Embodiments 1 to 3

Identical to Embodiment 1-1 except that the relevant preparation parameters are adjusted according to Table 1.

Table 1 to Table 3 show the preparation parameters and performance parameters of each embodiment and each comparative embodiment.

**Table 1**

| | First base film | First base film Material | Second base film | Second base film Material | First ceramic particles | Second ceramic particles | Thickness of lithium-ion battery (mm) | Capacity retention rate (%) | 130 °C hot-oven test pass rate | 135 °C hot-oven test pass rate |
|---|---|---|---|---|---|---|---|---|---|---|
| Embodiment 1-1 | Nonwoven fabric film | PET | Microporous film | PP+PE (mass ratio 1: 1) | Al₂O₃ | γ-AlOOH | 4.85 | 90 | 10/10 | 10/10 |
| Embodiment 1-2 | Nonwoven fabric film | PET | Microporous film | PP+PE (mass ratio 1: 1) | ZrO₂ | γ-AlOOH | 4.85 | 88 | 10/10 | 9/10 |
| Embodiment 1-3 | Nonwoven fabric film | PET | Microporous film | PP+PE (mass ratio 1: 1) | TiO₂ | γ-AlOOH | 4.85 | 86 | 9/10 | 7/10 |
| Embodiment 1-4 | Nonwoven fabric film | PET | Microporous film | PP+PE (mass ratio 1: 1) | SiO₂ | γ-AlOOH | 4.85 | 84 | 10/10 | 8/10 |
| Embodiment 1-5 | Nonwoven fabric film | PET | Microporous film | PP | Al₂O₃ | γ-AlOOH | 4.85 | 89 | 10/10 | 10/10 |
| Embodiment 1-6 | Nonwoven fabric film | PET | Microporous film | PE | Al₂O₃ | γ-AlOOH | 4.85 | 88 | 10/10 | 9/10 |
| Embodiment 1-7 | Nonwoven fabric film | PET | Microporous film | PP+PE (mass ratio 1: 1) | Al₂O₃ | γ-AlOOH | 4.85 | 82 | 10/10 | 10/10 |
| Embodiment 1-8 | Nonwoven fabric film | PET | Microporous film | PP+PE (mass ratio 1: 1) | Al₂O₃ | γ-AlOOH | 4.90 | 91 | 10/10 | 10/10 |
| Embodiment 1-9 | Nonwoven fabric film | PET | Microporous film | PP+PE (mass ratio 1: 1) | Al₂O₃ | γ-AlOOH | 4.81 | 80 | 91/0 | 5/10 |
| Comparative Embodiment 1 | Microporous film | PP+PE (mass ratio 1: 1) | Microporous film | PP+PE (mass ratio 1: 1) | Al₂O₃ | γ-AlOOH | 4.75 | 82 | 5/10 | 0/10 |
| Comparative Embodiment 2 | Nonwoven fabric film | PET | Nonwoven fabric film | PET | Al₂O₃ | γ-AlOOH | 5.01 | 89 | 10/10 | 10/10 |
| Comparative Embodiment 3 | Nonwoven fabric film | PET | Microporous film | PP+PE (mass ratio 1: 1) | γ-AlOOH | Al₂O₃ | 4.85 | 87 | 7/10 | 1/10 |

As can be seen from Embodiments 1-1 to 1-11 and Comparative Embodiments 1 to 3, the secondary battery contains a dual-separator structure in which the first base film is a nonwoven fabric film and the second base film is a microporous film; and the types of the first ceramic particles and the second ceramic particles are controlled within the ranges specified herein; and the thickness of the lithium-ion battery is relatively small, thereby improving the capacity retention rate and the 130 °C and 135 °C hot-oven test pass rates of the lithium-ion battery, indicating that the lithium-ion battery of this application is superior in electrolyte storage performance, cycle performance, and high-temperature thermal abuse performance while achieving a desirable energy density. The first base film and the second base film in Comparative Embodiment 1 are both microporous films. The first base film and the second base film in Comparative Embodiment 2 are both nonwoven fabric films. In Comparative Embodiment 3, the first ceramic particles are boehmite, and the second ceramic particles are aluminum oxide. Among the lithium-ion batteries in Comparative Embodiments 1 to 3, the lithium-ion battery in Comparative Embodiment 1 exhibits a relatively low hot-oven test pass rate at 130 °C and 135 °C, and is unable to achieve superior high-temperature thermal abuse performance while exhibiting good electrolyte storage performance and cycle performance. In Comparative Embodiment 2, although the lithium-ion battery exhibits a relatively high hot-oven test pass rate at 130 °C and 135 °C, the thickness of the lithium-ion battery is relatively large, giving rise to a relatively low energy density. Consequently, the resultant lithium-ion battery fails to achieve a relatively high energy density while exhibiting good high-temperature thermal abuse performance. In Comparative Embodiment 3, the lithium-ion battery exhibits a relatively low hot-oven test pass rate at 130 °C and 135 °C, and fails to achieve superior high-temperature thermal abuse performance while exhibiting good electrolyte storage performance and cycle performance. As can be seen from Embodiments 1-1 to 1-11, the lithium-ion battery of this application is relatively small in thickness, and exhibits a higher capacity retention rate and a higher hot-oven test pass rate at 130 °C and 135 °C, indicating that the lithium-ion battery of this application is superior in electrolyte storage performance, cycle performance, and high-temperature thermal abuse performance while achieving a desirable energy density.

The material of the first base film and the material of the second base film typically affect the electrolyte storage performance, cycle performance, and high-temperature thermal abuse performance of the lithium-ion battery. As can be seen from Embodiment 1-1 and Embodiments 1-5 to 1-6, when the material of the first base film and the material of the second base film fall within the ranges specified herein, the thickness of the lithium-ion battery is relatively small, and the capacity retention rate and the 130 °C and 135 °C hot-oven test pass rates of the lithium-ion battery are relatively high, indicating that the lithium-ion battery is superior in electrolyte storage performance, cycle performance, and high-temperature thermal abuse performance while achieving a desirable energy density.

The structures of the first separator and the second separator in the electrode assembly as well as the relative position relationship between the first or second separator and the electrode plate typically affect the electrolyte storage performance, cycle performance, and high-temperature thermal abuse performance of the lithium-ion battery. As can be seen from Embodiment 1-1 and Embodiments 1-7 to 1-9, when the structure of the electrode assembly falls within the range specified herein, the lithium-ion battery is relatively small in thickness, and exhibits a relatively high capacity retention rate and a relatively high hot-oven test pass rate at 130 °C and 135 °C, indicating that the lithium-ion battery of this application is superior in electrolyte storage performance, cycle performance, and high-temperature thermal abuse performance while achieving a desirable energy density.

**Table 2**

| | D₁ (µm) | D₂ (µm) | CW₁ (mg/cm²) | CW₂ (mg/cm²) | h₁ (µm) | h₂ (µm) | Thickness of lithium-ion battery (mm) | Capacity retention rate (%) | 130 °C hot-oven test pass rate | 135 °C hot-oven test pass rate |
|---|---|---|---|---|---|---|---|---|---|---|
| Embodiment 1-1 | 1 | 0.5 | 10 | 10 | 12 | 7 | 4.85 | 90 | 10/10 | 10/10 |
| Embodiment 2-1 | 0.2 | 0.1 | 10 | 10 | 12 | 7 | 4.85 | 88 | 10/10 | 10/10 |
| Embodiment 2-2 | 1.2 | 1 | 10 | 10 | 12 | 7 | 4.85 | 91 | 10/10 | 10/10 |
| Embodiment 2-3 | 0.05 | 0.05 | 10 | 10 | 12 | 7 | 4.85 | 85 | 10/10 | 10/10 |
| Embodiment 2-4 | 2.2 | 1.7 | 10 | 10 | 12 | 7 | 4.85 | 85 | 10/10 | 8/10 |
| Embodiment 2-5 | 1 | 0.5 | 9 | 9 | 12 | 7 | 4.84 | 90 | 10/10 | 10/10 |
| Embodiment 2-6 | 1 | 0.5 | 12 | 12 | 12 | 7 | 4.86 | 90 | 10/10 | 10/10 |
| Embodiment 2-7 | 1 | 0.5 | 6 | 6 | 12 | 7 | 4.81 | 83 | 10/10 | 8/10 |
| Embodiment 2-8 | 1 | 0.5 | 15 | 15 | 12 | 7 | 4.87 | 84 | 10/10 | 7/10 |
| Embodiment 2-9 | 1 | 0.5 | 10 | 10 | 10 | 3 | 4.76 | 90 | 10/10 | 6/10 |
| Embodiment 2-10 | 1 | 0.5 | 10 | 10 | 15 | 9 | 4.92 | 89 | 10/10 | 10/10 |
| Embodiment 2-11 | 1 | 0.5 | 10 | 10 | 8 | 2 | 4.74 | 91 | 9/10 | 8/10 |

The average particle diameter D₁ of the first ceramic particles and the average particle diameter D₂ of the second ceramic particles typically affect the electrolyte storage performance, cycle performance, and high-temperature thermal abuse performance of the lithium-ion battery. As can be seen from Embodiment 1-1 and Embodiments 2-1 to 2-4, when the average particle diameter D₁ of the first ceramic particles and the average particle diameter D₂ of the second ceramic particles fall within the ranges specified herein, the thickness of the lithium-ion battery is relatively small, and the capacity retention rate and the 130 °C and 135 °C hot-oven test pass rates of the lithium-ion battery are relatively high, indicating that the lithium-ion battery of this application is superior in electrolyte storage performance, cycle performance, and high-temperature thermal abuse performance while achieving a desirable energy density. In Embodiment 2-3, the average particle diameter D₁ of the first ceramic particles and the average particle diameter D₂ of the second ceramic particles are relatively small. Therefore, the ceramic particles are of a slightly lower ability to retain the electrolyte solution and improve the cycle performance of the lithium-ion battery to a lesser extent. In Embodiment 2-4, the average particle diameter D₁ of the first ceramic particles and the average particle diameter D₂ of the second ceramic particles are relatively large. Therefore, the particles are more prone to pierce the separator and cause a short circuit in the hot-oven test, so that the high-temperature thermal abuse safety performance of the lithium-ion battery is slightly lower.

The coating weight CW₁ of the first ceramic particles and the coating weight CW₂ of the second ceramic particles typically affect the electrolyte storage performance, cycle performance, and high-temperature thermal abuse performance of the lithium-ion battery. As can be seen from Embodiment 1-1 and Embodiments 2-5 to 2-8, when the coating weight CW₁ of the first ceramic particles and the coating weight CW₂ of the second ceramic particles fall within the ranges specified herein, the thickness of the lithium-ion battery is relatively small, and the capacity retention rate and the 130 °C and 135 °C hot-oven test pass rates of the lithium-ion battery are relatively high, indicating that the lithium-ion battery is superior in electrolyte storage performance, cycle performance, and high-temperature thermal abuse performance while achieving a desirable energy density. In Embodiment 2-7, the coating weight CW₁ of the first ceramic particles and the coating weight CW₂ of the second ceramic particles are relatively small, indicating that the thicknesses of the first ceramic coating and the second ceramic coating are relatively small. Therefore, the first ceramic coating is less capable of retaining the electrolyte solution and binding the first base film at high temperature, and the second ceramic coating is less capable of retaining the electrolyte solution and binding the second base film at high temperature, thereby improving the cycle performance and high-temperature thermal abuse performance of the lithium-ion battery to a lesser extent. In Embodiment 2-8, the coating weight CW₁ of the first ceramic particles and the coating weight CW₂ of the second ceramic particles are relatively large, indicating that the thicknesses of the first ceramic coating and the second ceramic coating are relatively large, thereby impairing the energy density to some extent. In addition, in the hot-oven test, the first ceramic particles and the second ceramic particles are more prone to pierce the separator and cause a short circuit, thereby exhibiting lower high-temperature thermal abuse performance.

The thickness h₁ of the first base film and the thickness h₂ of the second base film typically affect the electrolyte storage performance, cycle performance, and high-temperature thermal abuse performance of the lithium-ion battery. As can be seen from Embodiment 1-1 and Embodiments 2-9 to 2-11, when the thickness h₁ of the first base film and the thickness h₂ of the second base film fall within the ranges specified herein, the thickness of the lithium-ion battery is relatively small, and the capacity retention rate and the 130 °C and 135 °C hot-oven test pass rates of the lithium-ion battery are relatively high, indicating that the lithium-ion battery is superior in electrolyte storage performance, cycle performance, and high-temperature thermal abuse performance while achieving a desirable energy density. In Embodiment 2-11, the thickness h₁ of the first base film and the thickness h₂ of the second base film are relatively small. Due to the excessively small thickness of the lithium-ion battery, the probability of piercing the separator and causing a short circuit in the hot-oven test is increased, so that the high-temperature thermal abuse safety performance of the lithium-ion battery is slightly lower.

**Table 3**

| | First binder | Second binder | First binder | W₁ (%) | Second binder | W₂ (%) | Thickness of lithium-ion battery (mm) | Capacity retention rate (%) | 130 °C hot-oven test pass rate | 135 °C hot-oven test pass rate |
|---|---|---|---|---|---|---|---|---|---|---|
| Embodiment 1-1 | PVDF | PVDF | Water-soluble acrylic copolymer | 12.5 | Water-based acrylate ester copolymer emulsion | 10 | 4.85 | 90 | 10/10 | 10/10 |
| Embodiment 3-1 | PI | PI | Water-soluble acrylic copolymer | 12.5 | Water-based acrylate ester copolymer emulsion | 10 | 4.85 | 85 | 10/10 | 10/10 |
| Embodiment 3-2 | PAN | PEO | Water-soluble acrylic copolymer | 12.5 | Water-based acrylate ester copolymer emulsion | 10 | 4.85 | 85 | 10/10 | 10/10 |
| Embodiment 3-3 | PVDF | PVDF | Water-soluble acrylic copolymer | 5 | Water-based acrylate ester copolymer emulsion | 2 | 4.85 | 85 | 9/10 | 8/10 |
| Embodiment 3-4 | PVDF | PVDF | Water-soluble acrylic copolymer | 20 | Water-based acrylate ester copolymer emulsion | 15 | 4.85 | 83 | 10/10 | 9/10 |
| Embodiment 3-5 | PVDF | PVDF | Water-soluble acrylic copolymer | 3 | Water-based acrylate ester copolymer emulsion | 1 | 4.85 | 86 | 8/10 | 5/10 |
| Embodiment 3-6 | PVDF | PVDF | Water-soluble acrylic copolymer | 25 | Water-based acrylate ester copolymer emulsion | 25 | 4.85 | 80 | 10/10 | 10/10 |
| Embodiment 3-7 | PVDF | PVDF | Polyvinyl alcohol | 12.5 | Polyvinylpyrrolidone | 10 | 4.85 | 84 | 10/10 | 10/10 |

The types of the first binder and the second binder typically affect the electrolyte storage performance, cycle performance, and high-temperature thermal abuse performance of the lithium-ion battery. As can be seen from Embodiment 1-1 and Embodiments 3-1 to 3-2, when the types of the first binder and the second binder fall within the ranges specified herein, the thickness of the lithium-ion battery is relatively small, and the capacity retention rate and the 130 °C and 135 °C hot-oven test pass rates of the lithium-ion battery are relatively high, indicating that the lithium-ion battery is superior in electrolyte storage performance, cycle performance, and high-temperature thermal abuse performance while achieving a desirable energy density.

The type and content of the first binder as well as the type and content of the second binder typically affect the electrolyte storage performance, cycle performance, and high-temperature thermal abuse performance of the lithium-ion battery. As can be seen from Embodiment 1-1 and Embodiments 3-3 to 3-7, when the type and content of the first binder as well as the type and content of the second binder fall within the ranges specified herein, the thickness of the lithium-ion battery is relatively small, and the capacity retention rate and the 130 °C and 135 °C hot-oven test pass rates of the lithium-ion battery are relatively high, indicating that the lithium-ion battery is superior in electrolyte storage performance, cycle performance, and high-temperature thermal abuse performance while achieving a desirable energy density. In Embodiment 3-5, the content of the first binder and the content of the second binder are relatively low, indicating that the content of the first ceramic particles in the first ceramic coating and the content of the second ceramic particles in the second ceramic coating are relatively high. Therefore, in the hot-oven test, the probability of the first ceramic particles and the second ceramic particles piercing the separator to cause a short circuit is increased, thereby impairing the high-temperature thermal abuse performance to some extent. In Embodiment 3-6, the content of the first binder and the content of the second binder are relatively high, indicating that the content of the first ceramic particles in the first ceramic coating and the content of the second ceramic particles in the second ceramic coating are relatively low. Therefore, the first ceramic coating is less capable of retaining the electrolyte solution and binding the first base film at high temperature, and the second ceramic coating is less capable of retaining the electrolyte solution and binding the second base film at high temperature, thereby improving the cycle performance of the lithium-ion battery to a lesser extent.

It is hereby noted that the relational terms herein such as "first" and "second" are used merely to differentiate one entity or operation from another, but do not involve or imply any actual relationship or sequence between the entities or operations. Moreover, the terms "include", "comprise", and any variation thereof are intended to cover a non-exclusive inclusion relationship by which a process, method, or object that includes or comprises a series of elements not only includes such elements, but also includes other elements not expressly specified or also includes inherent elements of the process, method, or object.

Different embodiments of this application are described in a correlative manner. For the same or similar part in one embodiment, reference may be made to another embodiment. Each embodiment focuses on differences from other embodiments.

What is described above is merely exemplary embodiments of this application, but is not intended to limit this application.

## Claims

1. A secondary battery, comprising an electrode assembly (100), **characterized in that**,
the electrode assembly (100) is a jelly-roll structure; the electrode assembly (100) comprises a positive electrode plate (40), a negative electrode plate (30), a first separator (10), and a second separator (20);
the first separator (10) comprises a first base film (11) and a first ceramic coating (12), the first ceramic coating (12) is located on at least one surface of the first base film (11), the first base film (11) is a nonwoven fabric film, the first ceramic coating (12) comprises first ceramic particles; the first ceramic particles comprise at least one of aluminum oxide, zirconium dioxide, titanium dioxide, or silicon dioxide; and
the second separator (20) comprises a second base film (21) and a second ceramic coating (22), the second ceramic coating (22) is located on at least one surface of the second base film (21), the second base film (21) is a microporous film, the second ceramic coating (22) comprises second ceramic particles, and the second ceramic particles comprise boehmite.

2. The secondary battery according to claim 1, **characterized in that**, the negative electrode plate (30) is located between the first separator (10) and the second separator (20), the negative electrode plate (30) comprises a negative current collector (31), a first negative electrode material layer (33) and a second negative electrode material layer (34) ; the first negative electrode material layer (33) and the second negative electrode material layer (34) are located on two sides of the negative current collector (31) respectively; and, along a winding direction of the electrode assembly (100), a length of the first negative electrode material layer (33) is greater than a length of the second negative electrode material layer (34); the first separator (10) and the first negative electrode material layer (33) are located on the first side of the negative electrode plate (30), and the second separator (20) and the second negative electrode material layer (34) are located on a second side of the negative electrode plate (30).

3. The secondary battery according to claim 1, **characterized in that**, the first base film (11) comprises polyethylene terephthalate, and the second base film (21) comprises at least one of polypropylene or polyethylene.

4. The secondary battery according to claim 1, **characterized in that**, the first separator (10) further comprises a first bonding layer (13); the first bonding layer (13) comprises a first binder, and the first binder- is at least one selected from polyvinylidene fluoride, polyacrylonitrile, polyethylene oxide, or polyimide.

5. The secondary battery according to claim 1, **characterized in that**, the second separator (20) further comprises a second bonding layer (23); the second bonding layer (23) comprises a second binder, and the second binder is at least one selected from polyvinylidene fluoride, polyacrylonitrile, polyethylene oxide, or polyimide.

6. The secondary battery according to claim 4, **characterized in that**, the second separator (20) further comprises a second bonding layer (23); the second bonding layer (23) comprises a second binder, and the second binder is at least one selected from polyvinylidene fluoride, polyacrylonitrile, polyethylene oxide, or polyimide.

7. The secondary battery according to claim 1, **characterized in that**, the second separator (20) is located between the positive electrode plate (40) and the negative electrode plate (30); the first ceramic coating (12) is located on both sides of the first base film (11); the first ceramic particles comprise aluminum oxide; the second ceramic coating (22) is located on only one side of the second base film (21), the one side of the second base film (21) being facing away from the negative electrode plate (30); and the second ceramic particles comprise boehmite.

8. The secondary battery according to any one of claims 1 to 7, **characterized in that**, an average particle diameter of the first ceramic particles is 0.2 µm to 1.2 µm, and an average particle diameter of the second ceramic particles is 0.1 µm to 1.0 µm, determined as described in the description.

9. The secondary battery according to any one of claims 1 to 7, **characterized in that**, a coating weight of the first ceramic coating (12) is 9 mg/cm² to 12 mg/cm², and a coating weight of the second ceramic coating (22) is 9 mg/cm² to 12 mg/cm².

10. The secondary battery according to any one of claims 1 to 7, **characterized in that**, the first ceramic coating (12) further comprises a first binder; the first binder comprises at least one of a water-soluble acrylic copolymer, a water-based acrylate ester copolymer emulsion, polyvinyl alcohol, or polyvinyl pyrrolidone; and, based on a mass of the first ceramic coating (12), a mass percent of the first binder is 5% to 20%; and
the second ceramic coating (22) further comprises a second binder; the second binder comprises at least one of a water-soluble acrylic copolymer, a water-based acrylate ester copolymer emulsion, polyvinyl alcohol, or polyvinyl pyrrolidone; and, based on a mass of the second ceramic coating (22), a mass percent of the second binder is 2% to 15%.

11. The secondary battery according to any one of claims 1 to 7, **characterized in that**, a thickness of the first base film (11) is 10 µm to 15 µm, and a thickness of the second base film (21) is 3 µm to 9 µm.

12. An electronic device, comprising the secondary battery according to any one of claims 1 to 11.

## Patentansprüche

1. Sekundärbatterie, umfassend eine Elektrodenanordnung (100), **dadurch gekennzeichnet, dass**
die Elektrodenanordnung (100) eine Wickelstruktur vom Typ "Jelly-Roll" ist; die Elektrodenanordnung (100) eine positive Elektrodenplatte (40), eine negative Elektrodenplatte (30), einen ersten Separator (10) und einen zweiten Separator (20) umfasst;
der erste Separator (10) eine erste Basisfolie (11) und eine erste keramische Beschichtung (12) umfasst, sich die erste keramische Beschichtung (12) auf mindestens einer Oberfläche der ersten Basisfolie (11) befindet, die erste Basisfolie (11) eine Vliesstofffolie ist, die erste keramische Beschichtung (12) erste Keramikpartikel umfasst; die ersten Keramikpartikel mindestens eines von Aluminiumoxid, Zirconiumdioxid, Titandioxid oder Siliciumdioxid umfassen; und
der zweite Separator (20) eine zweite Basisfolie (21) und eine zweite keramische Beschichtung (22) umfasst, sich die zweite keramische Beschichtung (22) auf mindestens einer Oberfläche der zweiten Basisfolie (21) befindet, die zweite Basisfolie (21) eine mikroporöse Folie ist, die zweite keramische Beschichtung (22) zweite Keramikpartikel umfasst und die zweiten Keramikpartikel Böhmit umfassen.

2. Sekundärbatterie nach Anspruch 1, **dadurch gekennzeichnet, dass** sich die negative Elektrodenplatte (30) zwischen dem ersten Separator (10) und dem zweiten Separator (20) befindet, die negative Elektrodenplatte (30) einen negativen Stromableiter (31), eine erste negative Elektrodenmaterialschicht (33) und eine zweite negative Elektrodenmaterialschicht (34) umfasst; sich die erste negative Elektrodenmaterialschicht (33) und die zweite negative Elektrodenmaterialschicht (34) jeweils auf zwei Seiten des negativen Stromableiters (31) befinden; und entlang einer Wickelrichtung der Elektrodenanordnung (100) eine Länge der ersten negativen Elektrodenmaterialschicht (33) größer ist als eine Länge der zweiten negativen Elektrodenmaterialschicht (34); sich der erste Separator (10) und die erste negative Elektrodenmaterialschicht (33) auf der ersten Seite der negativen Elektrodenplatte (30) befinden und sich der zweite Separator (20) und die zweite negative Elektrodenmaterialschicht (34) auf einer zweiten Seite der negativen Elektrodenplatte (30) befinden.

3. Sekundärbatterie nach Anspruch 1, **dadurch gekennzeichnet, dass** die erste Basisfolie (11) Polyethylenterephthalat umfasst und die zweite Basisfolie (21) mindestens eines von Polypropylen oder Polyethylen umfasst.

4. Sekundärbatterie nach Anspruch 1, **dadurch gekennzeichnet, dass** der erste Separator (10) ferner eine erste Haftschicht (13) umfasst; die erste Haftschicht (13) ein erstes Bindemittel umfasst und das erste Bindemittel mindestens eines ist, ausgewählt aus Polyvinylidenfluorid, Polyacrylnitril, Polyethylenoxid oder Polyimid.

5. Sekundärbatterie nach Anspruch 1, **dadurch gekennzeichnet, dass** der zweite Separator (20) ferner eine zweite Haftschicht (23) umfasst; die zweite Haftschicht (23) ein zweites Bindemittel umfasst und das zweite Bindemittel mindestens eines ist, ausgewählt aus Polyvinylidenfluorid, Polyacrylnitril, Polyethylenoxid oder Polyimid.

6. Sekundärbatterie nach Anspruch 4, **dadurch gekennzeichnet, dass** der zweite Separator (20) ferner eine zweite Haftschicht (23) umfasst; die zweite Haftschicht (23) ein zweites Bindemittel umfasst und das zweite Bindemittel mindestens eines ist, ausgewählt aus Polyvinylidenfluorid, Polyacrylnitril, Polyethylenoxid oder Polyimid.

7. Sekundärbatterie nach Anspruch 1, **dadurch gekennzeichnet, dass** sich der zweite Separator (20) zwischen der positiven Elektrodenplatte (40) und der negativen Elektrodenplatte (30) befindet; sich die erste keramische Beschichtung (12) auf beiden Seiten der ersten Basisfolie (11) befindet; die ersten Keramikpartikel Aluminiumoxid umfassen; sich die zweite keramische Beschichtung (22) nur auf einer Seite der zweiten Basisfolie (21) befindet, wobei die eine Seite der zweiten Basisfolie (21) von der negativen Elektrodenplatte (30) abgewandt ist; und die zweiten Keramikpartikel Böhmit umfassen.

8. Sekundärbatterie nach einem der Ansprüche 1 bis 7, **dadurch gekennzeichnet, dass** ein mittlerer Partikeldurchmesser der ersten Keramikpartikel 0,2 µm bis 1,2 µm beträgt und ein mittlerer Partikeldurchmesser der zweiten Keramikpartikel 0,1 µm bis 1,0 µm beträgt, bestimmt wie in der Beschreibung beschrieben.

9. Sekundärbatterie nach einem der Ansprüche 1 bis 7, **dadurch gekennzeichnet, dass** ein Beschichtungsgewicht der ersten keramischen Beschichtung (12) 9 mg/cm2 bis 12 mg/cm2 beträgt und ein Beschichtungsgewicht der zweiten keramischen Beschichtung (22) 9 mg/cm² bis 12 mg/cm² beträgt.

10. Sekundärbatterie nach einem der Ansprüche 1 bis 7, **dadurch gekennzeichnet, dass** die erste keramische Beschichtung (12) ferner ein erstes Bindemittel umfasst; das erste Bindemittel mindestens eines von einem wasserlöslichen Acrylcopolymer, einer wasserbasierten Acrylsäureester-Copolymeremulsion, Polyvinylalkohol oder Polyvinylpyrrolidon umfasst; und, bezogen auf eine Masse der ersten keramischen Beschichtung (12), ein Massenanteil des ersten Bindemittels 5 % bis 20 % beträgt; und
die zweite keramische Beschichtung (22) ferner ein zweites Bindemittel umfasst; das zweite Bindemittel mindestens eines von einem wasserlöslichen Acrylcopolymer, einer wasserbasierten Acrylsäureester-Copolymeremulsion, Polyvinylalkohol oder Polyvinylpyrrolidon umfasst; und, bezogen auf eine Masse der zweiten keramischen Beschichtung (22), ein Massenanteil des zweiten Bindemittels 2 % bis 15 % beträgt.

11. Sekundärbatterie nach einem der Ansprüche 1 bis 7, **dadurch gekennzeichnet, dass** eine Dicke der ersten Basisfolie (11) 10 µm bis 15 µm beträgt und eine Dicke der zweiten Basisfolie (21) 3 µm bis 9 µm beträgt.

12. Elektronische Vorrichtung, umfassend die Sekundärbatterie nach einem der Ansprüche 1 bis 11.

## Revendications

1. Batterie secondaire, comprenant un ensemble d'électrodes (100), **caractérisée en ce que**
l'ensemble d'électrodes (100) est une structure enroulée de type « jelly-roll » ; l'ensemble d'électrodes (100) comprend une plaque d'électrode positive (40), une plaque d'électrode négative (30), un premier séparateur (10) et un second séparateur (20) ;
le premier séparateur (10) comprend un premier film de base (11) et un premier revêtement céramique (12), le premier revêtement céramique (12) est situé sur au moins une surface du premier film de base (11), le premier film de base (11) est un film non-tissé, le premier revêtement céramique (12) comprend des premières particules céramiques ; les premières particules céramiques comprennent au moins l'un parmi l'oxyde d'aluminium, le dioxyde de zirconium, le dioxyde de titane ou le dioxyde de silicium ; et
le second séparateur (20) comprend un second film de base (21) et un second revêtement céramique (22), le second revêtement céramique (22) est situé sur au moins une surface du second film de base (21), le second film de base (21) est un film microporeux, le second revêtement céramique (22) comprend des secondes particules céramiques, et les secondes particules céramiques comprennent de la boehmite.

2. Batterie secondaire selon la revendication 1, **caractérisée en ce que** la plaque d'électrode négative (30) est située entre le premier séparateur (10) et le second séparateur (20), la plaque d'électrode négative (30) comprend un collecteur de courant négatif (31), une première couche de matériau d'électrode négative (33) et une seconde couche de matériau d'électrode négative (34) ; la première couche de matériau d'électrode négative (33) et la seconde couche de matériau d'électrode négative (34) sont situées respectivement sur deux côtés du collecteur de courant négatif (31) ; et, selon une direction d'enroulement de l'ensemble d'électrodes (100), une longueur de la première couche de matériau d'électrode négative (33) est supérieure à une longueur de la seconde couche de matériau d'électrode négative (34) ; le premier séparateur (10) et la première couche de matériau d'électrode négative (33) sont situés sur le premier côté de la plaque d'électrode négative (30), et le second séparateur (20) et la seconde couche de matériau d'électrode négative (34) sont situés sur un second côté de la plaque d'électrode négative (30).

3. Batterie secondaire selon la revendication 1, **caractérisée en ce que** le premier film de base (11) comprend du poly(téréphtalate d'éthylène), et le second film de base (21) comprend au moins l'un parmi le polypropylène ou le polyéthylène.

4. Batterie secondaire selon la revendication 1, **caractérisée en ce que** le premier séparateur (10) comprend en outre une première couche de liaison (13) ; la première couche de liaison (13) comprend un premier liant, et le premier liant est au moins l'un choisi parmi le poly(fluorure de vinylidène), le polyacrylonitrile, le poly(oxyde d'éthylène) ou le polyimide.

5. Batterie secondaire selon la revendication 1, **caractérisée en ce que** le second séparateur (20) comprend en outre une seconde couche de liaison (23) ; la seconde couche de liaison (23) comprend un second liant, et le second liant est au moins l'un choisi parmi le poly(fluorure de vinylidène), le polyacrylonitrile, le poly(oxyde d'éthylène) ou le polyimide.

6. Batterie secondaire selon la revendication 4, **caractérisée en ce que** le second séparateur (20) comprend en outre une seconde couche de liaison (23) ; la seconde couche de liaison (23) comprend un second liant, et le second liant est au moins l'un choisi parmi le poly(fluorure de vinylidène), le polyacrylonitrile, le poly(oxyde d'éthylène) ou le polyimide.

7. Batterie secondaire selon la revendication 1, **caractérisée en ce que** le second séparateur (20) est situé entre la plaque d'électrode positive (40) et la plaque d'électrode négative (30) ; le premier revêtement céramique (12) est situé sur les deux côtés du premier film de base (11) ; les premières particules céramiques comprennent de l'oxyde d'aluminium ; le second revêtement céramique (22) est situé sur un seul côté du second film de base (21), ledit côté du second film de base (21) étant orienté à l'opposé de la plaque d'électrode négative (30) ; et les secondes particules céramiques comprennent de la boehmite.

8. Batterie secondaire selon l'une quelconque des revendications 1 à 7, **caractérisée en ce qu'**un diamètre moyen de particule des premières particules céramiques est de 0,2 µm à 1,2 µm, et un diamètre moyen de particule des secondes particules céramiques est de 0,1 µm à 1,0 µm, déterminé comme décrit dans la description.

9. Batterie secondaire selon l'une quelconque des revendications 1 à 7, **caractérisée en ce qu'**un grammage du premier revêtement céramique (12) est de 9 mg/cm2 à 12 mg/cm2, et un grammage du second revêtement céramique (22) est de 9 mg/cm2 à 12 mg/cm2.

10. Batterie secondaire selon l'une quelconque des revendications 1 à 7, **caractérisée en ce que** le premier revêtement céramique (12) comprend en outre un premier liant ; le premier liant comprend au moins l'un parmi un copolymère acrylique hydrosoluble, une émulsion de copolymère d'ester acrylate à base d'eau, l'alcool polyvinylique ou la polyvinylpyrrolidone ; et, par rapport à une masse du premier revêtement céramique (12), un pourcentage massique du premier liant est de 5 % à 20 % ; et
le second revêtement céramique (22) comprend en outre un second liant ; le second liant comprend au moins l'un parmi un copolymère acrylique hydrosoluble, une émulsion de copolymère d'ester acrylate à base d'eau, l'alcool polyvinylique ou la polyvinylpyrrolidone ; et, par rapport à une masse du second revêtement céramique (22), un pourcentage massique du second liant est de 2 % à 15 %.

11. Batterie secondaire selon l'une quelconque des revendications 1 à 7, **caractérisée en ce qu'**une épaisseur du premier film de base (11) est de 10 µm à 15 µm, et une épaisseur du second film de base (21) est de 3 µm à 9 µm.

12. Dispositif électronique, comprenant la batterie secondaire selon l'une quelconque des revendications 1 à 11.
